(19) **Europäisches Patentamt European Patent Office Office européen des brevets**

(11) **EP 4 464 801 A1**

(12) **EUROPEAN PATENT APPLICATION**
published in accordance with Art. 153(4) EPC

(43) Date of publication:
**20.11.2024 Bulletin 2024/47**

(21) Application number: **22928716.4**

(22) Date of filing: **28.02.2022**

(51) International Patent Classification (IPC):
*C21D 8/02* (2006.01)          *C21D 9/46* (2006.01)
*C22C 38/00* (2006.01)          *C22C 38/60* (2006.01)

(52) Cooperative Patent Classification (CPC):
**C21D 8/02; C21D 9/46; C22C 38/00; C22C 38/60**

(86) International application number:
**PCT/JP2022/008145**

(87) International publication number:
**WO 2023/162190 (31.08.2023 Gazette 2023/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JFE Steel Corporation Tokyo 100-0011 (JP)**

(72) Inventors:
• **KOMINE Shinsuke Tokyo 100-0011 (JP)**
• **NAKAGAITO Tatsuya Tokyo 100-0011 (JP)**

(74) Representative: **Hoffmann Eitle Patent- und Rechtsanwälte PartmbB Arabellastraße 30 81925 München (DE)**

(54) **STEEL SHEET, MEMBER, METHODS FOR MANUFACTURING SAME, METHOD FOR MANUFACTURING HOT-ROLLED STEEL SHEET FOR COLD-ROLLED STEEL SHEET, AND METHOD FOR MANUFACTURING COLD-ROLLED STEEL SHEET**

(57)     Provided are a steel sheet having a tensile strength (TS) of 780 MPa or more and excellent in crashworthiness, a member, and methods for manufacturing the steel sheet and the member.

A steel sheet has a chemical composition satisfying a carbon equivalent (CE) of 0.46% or more and a specific steel microstructure. In the steel sheet, an average crystal grain size of ferrite is 25 um or less, coefficient of variation (CV) of ferrite grain size × carbon equivalent (CE) is 0.28 or less, when the steel sheet is bent by 90° in a rolling (L) direction with a width (C) direction as an axis at radius of curvature/sheet thickness: 4.2 and then unbent to be flattened again, the ratio ($NF_{void}/NF$) of ferrite grains having a void at an interface to all ferrite grains is 15% or less in an L section in a region extending by 0 to 50 um from a steel sheet surface on a compressive-tensile deformation side, and a tensile strength is 780 MPa or more.

EP 4 464 801 A1

**Description**

Technical Field

The present invention relates to a steel sheet having high strength and excellent in crashworthiness, a member, methods for manufacturing the steel sheet and the member, a method for manufacturing a hot-rolled steel sheet for a cold-rolled steel sheet, and a method for manufacturing a cold-rolled steel sheet. A steel sheet according to the present invention is suitable for use mainly in automotive steel sheet applications.

Background Art

To reduce $CO_2$ emissions from the viewpoint of global environmental conservation, it has always been a significant challenge in the automobile industry to improve automobile fuel efficiency by reducing the weight of an automobile body while maintaining its strength. To reduce the weight of an automobile body while maintaining its strength, it is effective to increase the strength of a steel sheet used as a material for an automotive part to thereby achieve a thinner steel sheet. Meanwhile, such an automotive part made of a steel sheet is supposed to ensure the safety of car occupants in the case of a crash. Thus, a high-strength steel sheet used as a material for an automotive part is required to have high crashworthiness in addition to desired strength.

In recent years, high-strength steel sheets having a tensile strength TS of 780 MPa or more have been increasingly used for automobile bodies. From the viewpoint of crashworthiness, automotive parts are broadly classified into non-deformable members, such as pillars and bumpers, and energy-absorbing members, such as side members, and each member is required to have crashworthiness necessary to ensure the safety of occupants in the case of a crash of a moving automobile. The strength of non-deformable members has been increased, and high-strength steel sheets having a tensile strength (hereinafter also referred to simply as TS) of 780 MPa or more have already been put to practical use. However, in the energy-absorbing member applications, high-strength steel sheets of 780 MPa or more, when crashed, tend to undergo a member fracture starting from a portion subjected to primary processing in forming and unfortunately cannot stably exhibit crash energy absorption performance, and materials of 590 MPa or less are mainly used. Thus, there is still possibility that suppression of member fracture at the time of a crash and stable exhibition of high absorbed energy ensure crash safety, while weight saving contributes to environmental conservation. Accordingly, it is necessary to use a high-strength steel sheet excellent in crashworthiness and having a TS of 780 MPa or more in an energy-absorbing member.

In response to such a demand, for example, Patent Literature 1 discloses a technique related to an ultra-high-strength steel sheet excellent in formability and impact resistance and having a TS of 1200 MPa or more. Patent Literature 2 discloses a technique related to a high-strength steel sheet having a maximum tensile strength of 780 MPa or more and applicable to a member for absorbing impact of a crash.

Citation List

Patent Literature

PTL 1: Japanese Unexamined Patent Application Publication No. 2012-31462
PTL 2: Japanese Unexamined Patent Application Publication No. 2015-175061

Summary of Invention

Technical Problem

However, Patent Literature 1, while discussing crashworthiness, discusses impact resistance on the assumption that member fracture does not occur at the time of a crash, and does not discuss crashworthiness from the viewpoint of member fracture resistance.

In Patent Literature 2, fracture resistance at the level of a TS of more than 780 MPa is evaluated by subjecting a hat member to a cracking judgment by a dynamic axial crushing test with a falling weight. However, the process from crack initiation to fracture during crushing, which is important for crashworthiness, cannot be evaluated by the cracking judgment after crushing. This is because when a crack occurs in the early stage of the crushing process, absorbed energy may be reduced even if it is a minor crack that does not extend across the sheet thickness. When a crack occurs in the later stage of the crushing process, absorbed energy may be hardly affected even if it is a major crack that extends across the sheet thickness. Thus, the cracking judgment after crushing alone is inadequate for the evaluation of fracture resistance.

The present invention has been made in view of these circumstances, and an object thereof is to provide a steel sheet suitable for an energy-absorbing member of an automobile, the steel sheet having a tensile strength (TS) of 780 MPa or more and being excellent in crashworthiness, a member, and methods for manufacturing the steel sheet and the member.

Solution to Problem

As a result of intensive studies to solve the above problems, the present inventors have found the following.

A steel sheet has a chemical composition satisfying a carbon equivalent (CE) of 0.46% or more and a steel microstructure including, in terms of area fraction, ferrite: 10% to 50%, tempered martensite and bainite in total: 30% or more, retained austenite: 3% to 20%, fresh martensite: 15% or less, and ferrite, tempered martensite, bainite, retained austenite, and fresh martensite in total: 85% or more, wherein an average crystal grain size of ferrite is 25 um or less, coefficient of variation (CV) of ferrite grain size × carbon equivalent (CE) is 0.28 or less, when the steel sheet is bent by 90° in a rolling (L) direction with a width (C) direction as an axis at radius of curvature/sheet thickness: 4.2 and then unbent to be flattened again, a ratio ($NF_{void}$/NF) of ferrite grains having a void at an interface to all ferrite grains is 15% or less in an L section in a region extending by 0 to 50 $\mu$m from a steel sheet surface on a compressive-tensile deformation side, and a tensile strength is 780 MPa or more. This configuration has been found to provide a steel sheet having high strength and excellent in crashworthiness.

The present invention is based on these findings, and the gist thereof is as follows.

[1] A steel sheet having:

a chemical composition satisfying a carbon equivalent (CE) of 0.46% or more; and
a steel microstructure including, in terms of area fraction, ferrite: 10% to 50%, tempered martensite and bainite in total: 30% or more, retained austenite: 3% to 20%, fresh martensite: 15% or less, and ferrite, tempered martensite, bainite, retained austenite, and fresh martensite in total: 90% or more,
wherein an average crystal grain size of ferrite is 25 um or less,
coefficient of variation (CV) of ferrite grain size ×carbon equivalent (CE) is 0.28 or less,
when the steel sheet is bent by 90° in a rolling (L) direction with a width (C) direction as an axis at radius of curvature/sheet thickness: 4.2 and then unbent to be flattened again, a ratio ($NF_{void}$/NF) of ferrite grains having a void at an interface to all ferrite grains is 15% or less in an L section in a region extending by 0 to 50 $\mu$m from a steel sheet surface on a compressive-tensile deformation side, and
a tensile strength is 780 MPa or more.

[2] The steel sheet according to [1],

wherein the chemical composition contains, by mass%,
C: 0.07% to 0.20%,
Si: 0.10% to 2.00%,
Mn: 1.5% to 4.0%,
P: 0.100% or less,
S: 0.050% or less,
Sol. Al: 0.005% to 0.100%, and
N: 0.0100% or less, with the balance being Fe and incidental impurities.

[3] The steel sheet according to [2],

wherein the chemical composition further contains, by mass%,
the chemical composition further contains, by mass%,
at least one selected from
Cr: 1.000% or less,
Mo: 0.500% or less,
V: 0.500% or less,
Ti: 0.500% or less,
Nb: 0.500% or less,
B: 0.0050% or less,
Ni: 1.000% or less,

Cu: 1.000% or less,
Sb: 1.000% or less,
Sn: 1.000% or less,
As: 1.000% or less,
Ca: 0.0050% or less,
W: 0.500% or less,
Ta: 0.100% or less,
Mg: 0.050% or less,
Zr: 0.050% or less, and
REM: 0.005% or less.

[4] The steel sheet according to any one of [1] to [3], having, on a surface of the steel sheet, an electrogalvanized layer, a hot-dip galvanized layer, or a hot-dip galvannealed layer.

[5] A member obtained by subjecting the steel sheet according to any one of [1] to [4] to at least one of forming and welding.

[6] A method for manufacturing a steel sheet, the method including:

a hot rolling step of heating a steel slab satisfying a carbon equivalent (CE) of 0.46 or more and having the chemical composition according to [2] or [3] to a temperature range of 1100°C to 1300°C, performing hot rolling at a finish rolling temperature of 800°C to 950°C, and performing coiling with a cumulative rolling reduction in finish rolling set to 60% or more, a holding time in a temperature range of 750°C to 600°C in a cooling process from finish rolling delivery to coiling set to 10 s or less, and a coiling temperature set to 600°C or lower;

a cold rolling step of pickling a hot-rolled steel sheet obtained in the hot rolling step and performing cold rolling at a cumulative rolling reduction of 20% or more;

an annealing step of heating a cold-rolled steel sheet obtained in the cold rolling step to an annealing temperature of 750°C to 880°C and performing holding for 30 seconds or more;

a quenching step of, after the annealing step, performing cooling to a cooling stop temperature: (Ms - 250°C) to (Ms - 50°C); and

a tempering step of, after the quenching step, performing heating to a reheating temperature: 300°C to 500°C and holding for 20 seconds or more.

[7] A method for manufacturing a hot-rolled steel sheet for a cold-rolled steel sheet, the method including

a hot rolling step of heating a steel slab satisfying a carbon equivalent (CE) of 0.46 or more and having the chemical composition according to [2] or [3] to a temperature range of 1100°C to 1300°C, performing hot rolling at a finish rolling delivery temperature of 800°C to 950°C, and performing coiling with a cumulative rolling reduction in finish rolling set to 60% or more, a holding time in a temperature range of 750°C to 600°C in a cooling process from finish rolling delivery to coiling set to 10 s or less, and a coiling temperature set to 600°C or lower, thereby manufacturing a hot-rolled steel sheet having a microstructure including, in terms of area fraction of a hot-rolled steel sheet microstructure, ferrite: 20% or less, and fresh martensite and bainite in total: 80% or more.

[8] A method for manufacturing a cold-rolled steel sheet, the method including a cold rolling step of pickling a hot-rolled steel sheet obtained by the manufacturing method according to [7] and performing cold rolling at a cumulative rolling reduction of 20% or more.

[9] The method for manufacturing a steel sheet according to [6], including, after the annealing step and before the quenching step, or after the tempering step, a coating step of performing electrogalvanizing, hot-dip galvanizing, or hot-dip galvannealing on a surface of the steel sheet.

[10] The method for manufacturing a steel sheet according to [9], wherein the coating step after the annealing step and before the quenching step includes performing holding in a temperature range of 300°C to 500°C for 0 to 300 s before coating.

[11] A method for manufacturing a member, the method including a step of subjecting a steel sheet manufactured by the method for manufacturing a steel sheet according to [6], [9], or [10] to at least one of forming and welding.

Advantageous Effects of Invention

According to the present invention, a steel sheet having a tensile strength (TS) of 780 MPa or more and excellent in crashworthiness can be provided. A member obtained by subjecting the steel sheet according to the present invention to forming, welding, or the like is suitable for use as an energy-absorbing member used in the automobile field.

Brief Description of Drawings

[Fig. 1] Fig. 1 illustrates 90° bending (primary bending) in a bending-orthogonal bending test in EXAMPLES.
[Fig. 2] Fig. 2 illustrates orthogonal bending (secondary bending) in the bending-orthogonal bending test in EXAMPLES.
[Fig. 3] Fig. 3 is a perspective view of a test piece that has been subjected to 90° bending (primary bending).
[Fig. 4] Fig. 4 is a perspective view of a test piece that has been subjected to orthogonal bending (secondary bending).
[Fig. 5] Fig. 5 is a front view of a test member manufactured by spot welding a hat-shaped member and a steel sheet for an axial crushing test in EXAMPLES.
[Fig. 6] Fig. 6 is a perspective view of the test member illustrated in Fig. 5.
[Fig. 7] Fig. 7 is a schematic view for explaining the axial crushing test in EXAMPLES.

Description of Embodiments

The present invention will be described in detail below.
A steel sheet according to the present invention has a chemical composition satisfying a carbon equivalent (CE) of 0.46% or more and a steel microstructure including, in terms of area fraction, ferrite: 10% to 50%, tempered martensite and bainite in total: 30% or more, retained austenite: 3% to 20%, fresh martensite: 15% or less, and ferrite, tempered martensite, bainite, retained austenite, and fresh martensite in total: 90% or more, wherein an average crystal grain size of ferrite is 25 um or less, coefficient of variation (CV) of ferrite grain size $\times$ carbon equivalent (CE) is 0.28 or less, when the steel sheet is bent by 90° in a rolling (L) direction with a width (C) direction as an axis at radius of curvature/sheet thickness: 4.2 and then unbent to be flattened again, a number ratio ($NF_{void}$/NF) of ferrite grains having a void at an interface to all ferrite grains is 15% or less in an L section in a region extending by 0 to 50 um from a steel sheet surface on a compressive-tensile deformation side, and a tensile strength is 780 MPa or more.

Carbon equivalent (CE): 0.46% or more

The carbon equivalent CE, which is a measure of the strength of steel, means the effect of elements other than C expressed in terms of the C content. When the carbon equivalent CE is 0.46% or more, the area fraction of each metallic microstructure such as ferrite described later can be controlled within the range of the present invention to obtain the tensile strength (780 MPa or more) and crashworthiness of the present invention. The carbon equivalent CE is preferably 0.48% or more. The upper limit is not particularly specified, but in view of the balance with weldability and formability, the carbon equivalent CE is preferably 0.85% or less, more preferably 0.82% or less.
The carbon equivalent CE can be determined by the following formula (1).

Carbon equivalent CE = [C%] + ([Si%]/24) + ([Mn%]/6) + (1)

In the above formula, [element symbol %] represents the content (mass%) of each element, and an element not contained is expressed as 0.

Area fraction of ferrite: 10% to 50%

An area fraction of ferrite of more than 50% makes it difficult to achieve both the tensile strength (TS) of 780 MPa or more and crashworthiness. An area fraction of ferrite of less than 10% causes stress concentration in ferrite during deformation, which may promote void formation at the interface. Thus, the area fraction of ferrite is 10% to 50%. The area fraction of ferrite is preferably 15% or more. The area fraction of ferrite is preferably 45% or less.

Total area fraction of tempered martensite and bainite: 30% or more

Tempered martensite is effective in improving absorbed energy and strength at a crash while improving crashworthiness by suppressing member fracture at the time of crash deformation. If the total area fraction of tempered martensite and bainite is less than 30%, these effects cannot be sufficiently produced. Thus, the total area fraction is 30% or more, preferably 40% or more. The upper limit of the total area fraction is not limited, but in view of the balance with other microstructures, the total area fraction is preferably 80% or less.

Area fraction of retained austenite: 3% to 20%

Retained austenite is effective in improving crashworthiness by retarding the occurrence of cracking at the time of a crash. The mechanism is not clear but is probably as follows. Retained austenite is work-hardened at the time of crash deformation, which increases the radius of curvature in bending deformation to disperse the strain at a bent portion. The dispersion of the strain reduces stress concentration at a portion where a void is formed as a result of primary processing, resulting in improved crashworthiness. If the area fraction of retained austenite is less than 3%, this effect is not produced. Thus, the area fraction of retained austenite is 3% or more, preferably 5% or more. On the other hand, if the area fraction of retained austenite is more than 20%, fresh martensite formed through stress-induced transformation may lower the fracture resistance at the time of a crash. Thus, the area fraction of retained austenite is 20% or less, preferably 15% or less.

Fresh martensite: 15% or less

Fresh martensite is effective in increasing strength. However, voids are likely to occur at grain boundaries between fresh martensite and soft phases, and an area fraction of fresh martensite of more than 15% may promote void formation at the interface between fresh martensite and ferrite to reduce crashworthiness. Thus, the area fraction of fresh martensite is 15% or less, preferably 10% or less, more preferably 5% or less. The lower limit of the area fraction of fresh martensite may be 0%.

Total area fraction of ferrite, tempered martensite, bainite, retained austenite, and fresh martensite: 90% or more

A total area fraction of ferrite, tempered martensite, bainite, retained austenite, and fresh martensite of less than 90% leads to an increased area fraction of phases other than the above, making it difficult to achieve both strength and crashworthiness. Examples of phases other than the above include pearlite and cementite, and these phases, if increased, may be origins of void formation at the time of crash deformation to reduce crashworthiness. An increase in pearlite or cementite may decrease strength. When the above total area fraction is 90% or more, high strength and crashworthiness are provided regardless of the types and area fractions of the other phases. The total area fraction is preferably 95% or more. The total area fraction may be 100%. The total area fraction of pearlite and cementite constituting remaining microstructures other than the above is 10% or less. Preferably, the total area fraction of these remaining microstructures is 7% or less, more preferably 5% or less, still more preferably 3% or less.

The area fraction of each microstructure is the percentage of an area of each phase in an observed area. The area fraction of each microstructure is measured as described below. A thickness cross-section of a steel sheet cut at a right angle to the rolling direction is polished and then etched with 3 vol% nital. At its 1/4 thickness position, three view areas are micrographed with a scanning electron microscope (SEM) at a magnification of 1500X, and from image data obtained, the area fraction of each microstructure is determined using Image-Pro manufactured by Media Cybernetics. The average of area fractions in the three view areas is the area fraction of each microstructure in the present invention. In the image data, ferrite can be distinguished as black, bainite as black including island-shaped retained austenite or gray including regularly oriented carbides, tempered martensite as light gray including fine irregularly oriented carbides, and retained austenite as white. Fresh martensite also exhibits a white color, and fresh martensite and retained austenite are difficult to distinguish from each other in the SEM images. Thus, the area fraction of fresh martensite is determined by subtracting the area fraction of retained austenite determined by a method described later from the total area fraction of fresh martensite and retained austenite.

In the present invention, an X-ray diffraction intensity was measured to determine the volume fraction of retained austenite, and the volume fraction was regarded as the area fraction of retained austenite. The volume fraction of retained austenite is determined as the ratio of an integrated X-ray diffraction intensity of (200), (220), and (311) planes of fcc iron to an integrated X-ray diffraction intensity of (200), (211), and (220) planes of bcc iron at the 1/4 thickness plane.

Average crystal grain size of ferrite: 25 um or less

In the steel sheet according to the present invention, an average crystal grain size of ferrite of 25 um or less provides high crashworthiness. This mechanism is not clear but is probably as follows. A fracture at the time of a crash, which leads to lower crashworthiness, originates from the occurrence and growth of a crack. It is considered that the occurrence of a crack is facilitated by a decrease in work hardenability and the formation and joining of voids in a large hardness difference region. In a crash of an actual member, the member deforms such that a portion subjected to primary processing during forming is bent back in a direction perpendicular to the primary processing. If a void is formed at this time in a large hardness difference region of the primary-processed portion, stress concentrates around the void to promote the formation and growth of a crack, thus resulting in a fracture. The cause of void formation in the large hardness difference region is that the amount of deformation of a soft phase is larger than that of a hard phase. Thus, by making ferrite finer, the amount of deformation is reduced, and the formation and growth of voids in the primary-processed portion and a consequent member fracture are suppressed to provide high fracture resistance. Thus, the average crystal grain size of ferrite is 25 um or less, preferably 20 um or less. The lower limit of the average crystal grain size of ferrite is not particularly specified, but is preferably 3 um or more.

The average crystal grain size of ferrite is measured as follows: at the 1/4 thickness position, at least 10 view areas of 40 um × 50 um are micrographed with a scanning electron microscope (SEM) at a magnification of 2000X, and from image data obtained, equivalent circular diameters are calculated from area ratios of ferrite grains using Image-Pro mentioned above and averaged.

The standard deviation of ferrite grain size given later can be calculated from ferrite grain sizes measured using Image-Pro mentioned above.

Coefficient of variation (CV) of ferrite grain size × carbon equivalent (CE): 0.28 or less

In the steel sheet according to the present invention, CV × CE satisfying 0.28 or less provides high crashworthiness. This mechanism is not clear but is probably as follows. The formation and growth of voids in the primary-processed portion, which is the origin of a fracture at the time of a crash, are promoted by local stress concentration. To suppress this, the reducing of variation in ferrite grain size in the steel microstructure and the softening of hard phases are considered to be effective. Thus, CV × CE satisfying 0.28 or less, where CV is a measure of the former (the reducing of variation in ferrite grain size in the steel microstructure) and CE is a measure of the latter (the softening of hard phases), provides high fracture resistance. CV × CE is preferably 0.25 or less.

The coefficient of variation CV of ferrite grain size can be determined by the following formula (2).
[Math. 1]

$$CV = \text{standard deviation of ferrite grain size } \sigma_{d_F} \,/\, \text{average crystal grain size of ferrite } \overline{d_F}$$

$$\ldots (2)$$

The carbon equivalent CE can be determined by the following formula (1).

$$CE = [C\%] + ([Si\%]/24) + ([Mn\%]/6) + ([Ni\%]/40) + ([Cr\%]/5) + ([Mo\%]/4) + ([V\%]/14) \ldots (1)$$

In the above formula, [element symbol %] represents the content (mass%) of each element, and an element not contained is expressed as 0.

The desired ferrite average crystal grain size and CV × CE can be achieved by controlling the rolling reduction in finish rolling during hot rolling described later, the cooling process from finish rolling delivery to coiling, and the coiling temperature so as to form a hot-rolled microstructure as a microstructure composed mainly of fresh martensite and bainite. Forming the hot-rolled microstructure as a microstructure composed mainly of fine fresh martensite and bainite increases nucleation sites in the formation of ferrite in an annealing step and a cooling step subsequent to the annealing, thus providing a microstructure in which uniform and fine ferrite grains are dispersed.

The number ratio ($NF_{void}$/NF) of ferrite grains having a void at an interface to all ferrite grains in an L section in a region extending by 0 to 50 um from a steel sheet surface on a compressive-tensile deformation side, as determined when the steel sheet is bent by 90° in a rolling (L) direction with a width (C) direction as an axis at radius of curvature/sheet thickness: 4.2 and then unbent to be flattened again: 15% or less

In the steel sheet according to the present invention, $NF_{void}$/NF satisfying 15% or less provides high crashworthiness (NF is the number of all ferrite grains in an L section in a region extending by 0 to 50 um from a steel sheet surface on a compressive-tensile deformation side, as counted when the steel sheet is bent by 90° in a rolling (L) direction with a width (C) direction as an axis at radius of curvature/sheet thickness: 4.2 and then unbent to be flattened again. $NF_{void}$ is the number of ferrite grains having a void at an interface in the L section in the region extending by 0 to 50 um from the steel sheet surface on the compressive-tensile deformation side, as counted when the steel sheet is bent by 90° in the rolling (L) direction with the width (C) direction as an axis at radius of curvature/sheet thickness: 4.2 and then unbent to be flattened again).

This mechanism is not clear but is probably as follows. A fracture at the time of a crash, which leads to lower crashworthiness, originates from the occurrence and growth of a crack. It is considered that the occurrence of a crack is facilitated by a decrease in work hardenability and the formation and joining of voids in a large hardness difference region. In a crash of an actual member, a portion that has undergone deformation during forming (primary processing) undergoes secondary deformation at the time of the crash, and at this time, the deformation history of a fracture origin is considered to be a portion that has undergone tensile deformation after undergoing compressive deformation due to the primary processing and the secondary deformation. In the compressive-tensile deformed portion, if a void is formed in a large hardness difference region, stress concentrates around the void to promote the formation and growth of a crack, thus probably resulting in a fracture. Thus, by reducing the large hardness difference region by means of tempered martensite and bainite, further suppressing macroscopic stress concentration at the primary-processed portion during deformation by using retained austenite as necessary, and controlling the grain size of ferrite to suppress microscopic stress concentration on coarse ferrite grains, the formation and growth of voids in the primary-processed portion and a consequent member fracture are suppressed to provide high fracture resistance. Thus, to produce these effects, $NF_{void}/NF$ is 15% or less, preferably 10% or less. The industrially obtainable lower limit of $NF_{void}/NF$ is 1 or more.

If the primary bending conditions (bending by 90° in a rolling (L) direction with a width (C) direction as an axis at radius of curvature/sheet thickness: 4.2) are satisfied, any processing method may be used. Examples of methods of primary bending include bending by a V-block method and bending by draw forming. Examples of methods of unbending include pressing using a flat jig.

$NF_{void}/NF$ is measured in the following manner. After the steel sheet is bent by 90° in a rolling (L) direction with a width (C) direction as an axis at radius of curvature/sheet thickness: 4.2 and unbent to be flattened again, a thickness cross-section is polished, and an L section in a region extending by 0 to 50 um from a steel sheet surface on a compressive-tensile side is observed. In the L section, three view areas are micrographed with a scanning electron microscope (SEM) at a magnification of 2000X, and from image data obtained, the number of all ferrite grains and the number of ferrite grains having a void at an interface in the view areas are counted using Image-Pro manufactured by Media Cybernetics to determine their ratio. $NF_{void}/NF$ is defined as the average of the three view areas. Voids are darker black than ferrite and clearly distinguishable from microstructures.

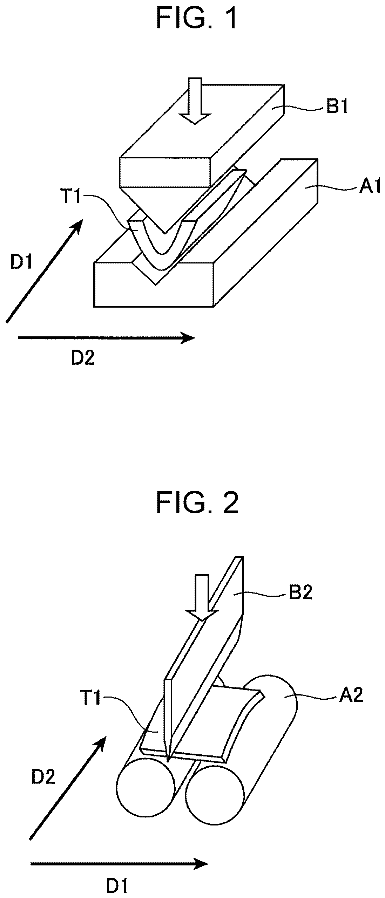

In the present invention, bending by 90° in a rolling (L) direction with a width (C) direction as an axis refers to the following procedure: a steel sheet is bent by pressing on a steel sheet surface on one side in a direction perpendicular to the width direction and the rolling direction (see the reference signs D1 and D2 in Fig. 1) such that the distance between both end portions becomes shorter when the steel sheet is viewed in the width (C) direction (see the reference sign D1 in Fig. 1) (in a widthwise steel sheet view (widthwise vertical sectional view)), and the pressing is carried out until the angle between flat portions of the both end portions not subjected to bending becomes 90°.

The steel sheet surface on a compressive-tensile deformation side refers to the pressed steel sheet surface on one side described above (a steel sheet surface that comes into contact with a pressing unit of a punch or the like that applies pressing).

The L section after unbending refers to a section that is formed by cutting the steel sheet parallel to the direction of deformation caused by bending and perpendicularly to the steel sheet surface and that is perpendicular to the width direction.

The position of measurement of ferrite grains after unbending is a region formed as a result of bending and including a corner portion extending in the width (C) direction (see the reference sign D1 in Fig. 1). More specifically, in an area that is lowest in a direction perpendicular to the width direction and the rolling direction (a pressing direction of a pressing unit of a punch or the like) after bending, the number of ferrite grains is measured in a region extending by 0 to 50 um in the thickness direction.

The steel sheet according to the present invention may have, on a surface of the steel sheet, an electrogalvanized layer, a hot-dip galvanized layer, or a hot-dip galvannealed layer.

The tensile strength (TS) of the steel sheet according to the present invention is 780 MPa or more. As used herein, "high strength" refers to a tensile strength (TS) of 780 MPa or more. The upper limit of the tensile strength (TS) is not particularly specified, but preferably 1470 MPa or less from the viewpoint of the balance with other properties. The method of measuring the tensile strength (TS) is as follows: a JIS No. 5 tensile test piece (JIS Z 2201) is sampled from a steel sheet in a direction perpendicular to the rolling direction, and a tensile test is performed at a strain rate of $10^{-3}$/s in accordance with provisions of JIS Z 2241 (2011) to determine the tensile strength (TS).

The thickness of the steel sheet according to the present invention is preferably 0.2 mm or more from the viewpoint of effectively producing the advantageous effects of the present invention. The thickness of the steel sheet according to the present invention is preferably 3.2 mm or less from the viewpoint of effectively producing the advantageous effects of the present invention.

The steel sheet according to the present invention is excellent in crashworthiness. As used herein, "excellent in crashworthiness" refers to having good fracture resistance and having a good absorbed energy. As used herein, "having good fracture resistance" means that when a bending-orthogonal bending test described below is performed, $\Delta S_{50}$, which is an average of strokes at points where the load has decreased from a maximum load by 50%, is 29 mm or more. As used herein, "having good crashworthiness" means that when an axial crushing test described in EXAMPLES is performed, an average $F_{ave}$ of areas of stroke ranges of 0 to 100 mm in stroke-load graphs at crushing is 38000 N or more.

The above-mentioned bending-orthogonal bending test is performed as described below.

First, a steel sheet is bent by 90° in a rolling (L) direction with a width (C) direction as an axis at radius of curvature/sheet thickness: 4.2 and then subjected to unbending (primary bending) to be flattened again, thereby preparing a test piece. In the 90° bending (primary bending), as illustrated in Fig. 1, a punch B1 is pressed against the steel sheet placed on a die A1 having a V-groove to obtain a test piece T1. Next, as illustrated in Fig. 2, a punch B2 is pressed against the test piece T1 placed on support rolls A2 such that the bending direction is a direction perpendicular to the rolling direction to perform orthogonal bending (secondary bending). In Figs. 1 and 2, D1 denotes the width (C) direction, and D2 denotes the rolling (L) direction.

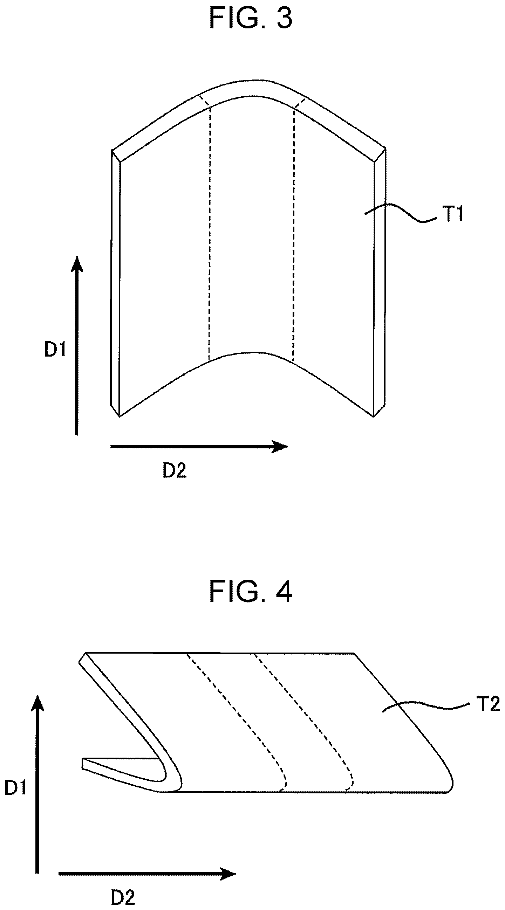

The test piece T1 as a result of subjecting the steel sheet to 90° bending (primary bending) is illustrated in Fig. 3. A test piece T2 as a result of subjecting the test piece T1 to orthogonal bending (secondary bending) is illustrated in Fig. 4. The positions indicated by the broken lines on the test piece T2 in Fig. 4 correspond to the positions indicated by the broken lines on the test piece T1 in Fig. 3 before being subjected to the orthogonal bending.

The conditions of the orthogonal bending are as follows.

[Orthogonal bending conditions]

Test method: roll support, punch pressing
Roll diameter: $\phi$30 mm
Punch tip R: 0.4 mm
Roll-to-roll distance: (sheet thickness $\times$ 2) + 1.5 mm
Stroke speed: 20 mm/min
Test piece size: 60 mm $\times$ 60 mm
Bending direction: perpendicular to rolling direction

In a stroke-load curve obtained when the orthogonal bending is performed, a stroke at a point where the load has decreased from a maximum load by 50% is determined. The bending-orthogonal bending test is performed three times, and the strokes at points where the load has decreased from a maximum load by 50% are averaged to determine $\Delta S_{50}$.

The above-mentioned axial crushing test is performed as described below.

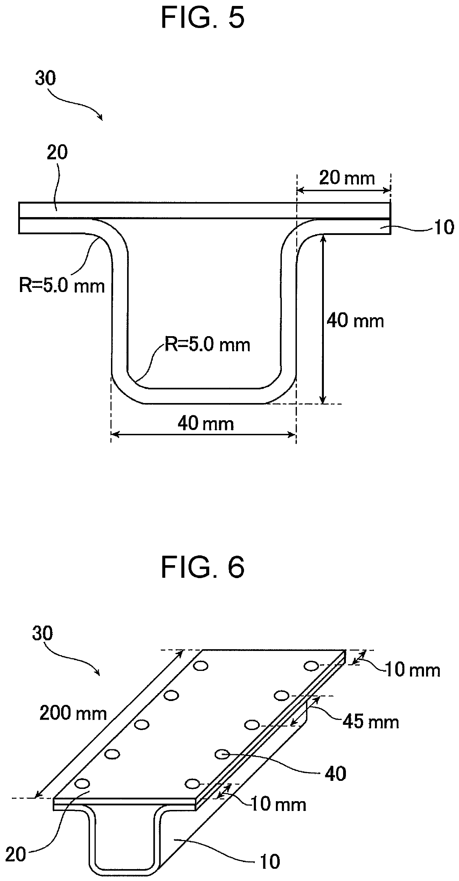

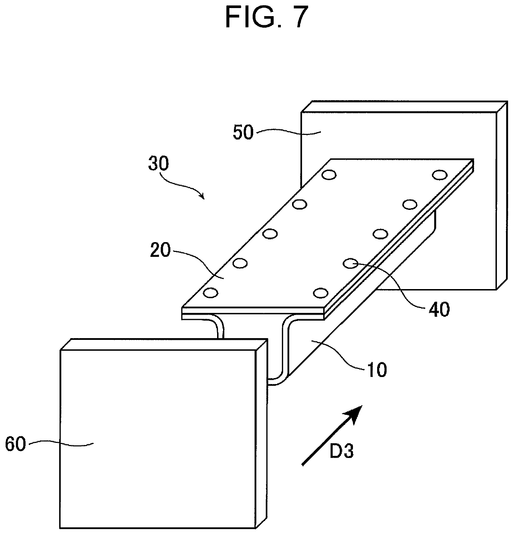

First, in view of the influence of sheet thickness, every axial crushing test is performed using a steel sheet having a thickness of 1.2 mm. A steel sheet is cut out and formed (bent) so as to have a depth of 40 mm using a die with a punch corner radius of 5.0 mm and a die corner radius of 5.0 mm, thereby fabricating a hat-shaped member 10 illustrated in Figs. 5 and 6. Separately, the steel sheet used as a material of the hat-shaped member is cut out to a size of 200 mm $\times$ 80 mm. Next, a steel sheet 20 thus cut out and the hat-shaped member 10 are spot welded to fabricate a test member 30 as illustrated in Figs. 5 and 6. Fig. 5 is a front view of the test member 30 fabricated by spot welding the hat-shaped member 10 and the steel sheet 20. Fig. 6 is a perspective view of the test member 30. As illustrated in Fig. 6, spot welds 40 are positioned such that the distance between a steel sheet end and a weld is 10 mm and the distance between the welds is 45 mm. Next, as illustrated in Fig. 7, the test member 30 is joined to a base plate 50 by TIG welding to prepare an axial crushing test sample. Next, an impactor 60 is crashed against the prepared axial crushing test sample at a constant crash speed of 10 m/s to crush the axial crushing test sample by 100 mm. As illustrated in Fig. 7, a crushing direction D3 is parallel to the longitudinal direction of the test member 30. In a stroke-load graph at the crushing, the area of a stroke range of 0 to 100 mm is determined. The test is performed three times, and the areas are averaged to determine an absorbed energy ($F_{ave}$).

Next, preferred ranges of the chemical composition of the steel sheet will be described. Unless otherwise specified, "%" representing the content of each component element means "mass%".

C: 0.07% to 0.20%

C facilitates the formation of phases other than ferrite and forms alloy compounds together with Nb, Ti, and the like, and thus is an element necessary for strength improvement. A C content of less than 0.07% may fail to provide desired strength even under optimized manufacturing conditions. Thus, the C content is preferably 0.07% or more, more preferably 0.10% or more. On the other hand, a C content of more than 0.20% may excessively increase the strength of martensite, failing to provide the crashworthiness of the present invention even under optimized manufacturing conditions. Thus, the C content is preferably 0.20% or less, more preferably 0.18% or less.

Si: 0.10% to 2.00%

Si is a ferrite-forming element and is also a solid solution-strengthening element. Thus, Si contributes to improving the balance between strength and ductility. To produce this effect, the Si content is preferably 0.10% or more, more preferably 0.20% or more. On the other hand, a Si content of more than 2.00% may cause a decrease in deposition and adhesion of zinc coating and deterioration of surface quality. Thus, the Si content is preferably 2.00% or less, more preferably 1.50% or less.

Mn: 1.5% to 4.0%

Mn is a martensite-forming element and is also a solid solution-strengthening element. Mn also contributes to stabilizing retained austenite. To produce these effects, the Mn content is preferably 1.5% or more. The Mn content is more preferably 2.0% or more. On the other hand, a Mn content of more than 4.0% may lead to an increased retained austenite fraction, resulting in low crashworthiness. Thus, the Mn content is preferably 4.0% or less, more preferably 3.5% or less.

P: 0.100% or less

P is an element effective in strengthening steel. However, a P content of more than 0.100% may significantly slow down the alloying rate. An excessively high P content of more than 0.100% may cause embrittlement due to grain boundary segregation, thus lowering the fracture resistance at the time of a crash even if the steel microstructure of the present invention is satisfied. Thus, the P content is 0.100% or less, preferably 0.050% or less. Although the lower limit of the P content is not specified, the lower limit that is industrially feasible at present is about 0.002%, preferably 0.002% or more.

S: 0.050% or less

S may form into an inclusion such as MnS to cause a crack extending along a metal flow at a weld, thus reducing crashworthiness even if the steel microstructure of the present invention is satisfied. Thus, the S content is preferably as low as possible, but in terms of the manufacturing cost, the S content is preferably 0.050% or less. The S content is more preferably 0.010% or less. Although the lower limit of the S content is not specified, the lower limit that is industrially feasible at present is about 0.0002%, preferably 0.0002% or more.

Sol. Al: 0.005% to 0.100%

Al acts as a deoxidizing agent and is also a solid solution-strengthening element. A Sol. Al content of less than 0.005% may fail to produce these effects, resulting in low strength even if the steel microstructure of the present invention is satisfied. Thus, the Sol. Al content is preferably 0.005% or more. On the other hand, a Sol. Al content of more than 0.100% degrades the slab quality in steelmaking. Thus, the Sol. Al content is preferably 0.100% or less, more preferably 0.04% or less.

N: 0.0100% or less

N forms into coarse nitride and carbonitride inclusions such as TiN, (Nb, Ti)(C, N), and AlN in steel to reduce crashworthiness, and thus the content of N needs to be low. Since the crashworthiness tends to be low when the N content is more than 0.0100%, the N content is preferably 0.0100% or less. The N content is more preferably 0.007% or less, still more preferably 0.005% or less. Although the lower limit of the N content is not particularly specified, the lower limit that is industrially feasible at present is about 0.0003%, preferably 0.0003% or more.

The steel sheet according to the present invention has a chemical composition containing the components described above and Fe (iron) and incidental impurities constituting the balance. In particular, a steel sheet according to an embodiment of the present invention preferably has a chemical composition containing the components described above with the balance being Fe and incidental impurities.

The steel sheet according to the present invention may appropriately contain components (optional elements) described below according to the desired characteristics.

At least one selected from Cr: 1.000% or less, Mo: 0.500% or less, V: 0.500% or less, Ti: 0.500% or less, Nb: 0.500% or less, B: 0.0050% or less, Ni: 1.000% or less, Cu: 1.000% or less, Sb: 1.000% or less, Sn: 1.000% or less, As: 1.000% or less, Ca: 0.0050% or less, W: 0.500% or less, Ta: 0.100% or less, Mg: 0.050% or less, Zr: 0.050% or less, and REM: 0.005% or less

Cr, Mo, and V are elements effective in enhancing hardenability and strengthening steel. However, when they are excessively added in amounts more than Cr: 1.000%, Mo: 0.500%, and V: 0.500%, the above effect is saturated, and furthermore the cost of raw materials increases. In addition, the second phase fraction may be excessively large to lower the fracture resistance at the time of a crash. Thus, when any of Cr, Mo, and V is contained, the Cr content is preferably 1.000% or less, the Mo content is preferably 0.500% or less, and the V content is preferably 0.500% or less. More preferably, the Cr content is 0.800% or less, the Mo content is 0.400% or less, and the V content is 0.400% or less. Since the advantageous effects of the present invention are produced even when the contents of Cr, Mo, and V are low, the lower limit of each content is not particularly specified. To more effectively produce the effect of hardenability, the contents of Cr, Mo, and V are each preferably 0.005% or more.

Ti and Nb are elements effective for precipitation strengthening of steel. However, a Ti content or Nb content of more than 0.500% may lower the fracture resistance at the time of a crash. Thus, when any of Ti and Nb is contained, the Ti content and the Nb content are each preferably 0.500% or less. More preferably, the Ti content and the Nb content are each 0.400% or less. Since the advantageous effects of the present invention are produced even when the contents of Ti and Nb are low, the lower limit of each content is not particularly specified. To more effectively produce the effect of precipitation strengthening of steel, the Ti content and the Nb content are each preferably 0.005% or more.

B can be added as required because B inhibits the formation and growth of ferrite from austenite grain boundaries to thereby contribute to improving hardenability. However, a B content of more than 0.0050% may lower the fracture resistance at the time of a crash. Thus, when B is contained, the B content is preferably 0.0050% or less. More preferably, the B content is 0.0040% or less. Since the advantageous effects of the present invention are produced even when the B content is low, the lower limit of the B content is not particularly specified. To more effectively produce the effect of hardenability improvement, the B content is preferably 0.0003% or more.

Ni and Cu are elements effective in strengthening steel. However, a Ni or Cu content of more than 1.000% may lower the fracture resistance at the time of a crash. Thus, when any of Ni and Cu is contained, the contents of Ni and Cu are each preferably 1.000% or less. More preferably, the Ni content and the Cu content are each 0.800% or less. Since the advantageous effects of the present invention are produced even when the contents of Ni and Cu are low, the lower limit of each content is not particularly specified. To more effectively produce the effect of strengthening steel, the Ni content and the Cu content are each preferably 0.005% or more.

Sb and Sn can be added as required from the viewpoint of suppressing nitriding and oxidation of steel sheet surfaces and decarburization of regions near the steel sheet surfaces. By suppressing such nitriding and oxidation, the amount of martensite formed in the steel sheet surfaces can be prevented from decreasing, thus improving crashworthiness. However, an Sb or Sn content of more than 1.000% may result in low crashworthiness due to grain boundary embrittlement. Thus, when any of Sb and Sn is contained, the Sb content and the Sn content are each preferably 1.000% or less. More preferably, the Sb content and the Sn content are each 0.800% or less. Since the advantageous effects of the present invention are produced even when the contents of Sb and Sn are low, the lower limit of each content is not particularly specified. To more effectively produce the effect of improving crashworthiness, the Sb content and the Sn content are each preferably 0.005% or more.

As (arsenic) is an element that segregates at grain boundaries and that is contained as impurities in raw material scraps. From the viewpoint of suppression of grain boundary embrittlement, the As content is preferably 1.000% or less. More preferably, the As content is 0.800% or less. The content of As is preferably as low as possible, and although the lower limit of the content is not particularly specified, it is preferably 0.005% or more from the viewpoint of refining cost.

Ca is an element effective in improving workability through shape control of sulfides. However, a content of Ca of more than 0.0050% may adversely affect the cleanliness of steel, resulting in low characteristics. Thus, when Ca is contained, the content of Ca is preferably 0.0050% or less. More preferably, the Ca content is 0.0040% or less. Since the advantageous effects of the present invention are produced even when the content of Ca is low, the lower limit of the content is not particularly specified. To more effectively produce the effect of improving workability, the content of Ca is preferably 0.0010% or more.

W forms into a fine carbide, a nitride, or a carbonitride during hot rolling or annealing and is useful for precipitation strengthening of steel. A W content of more than 0.500% reduces workability. Thus, when W is contained, the W content is 0.500% or less. When W is contained, the W content is preferably 0.005% or more, more preferably 0.050% or more. When W is contained, the W content is preferably 0.400% or less, more preferably 0.300% or less.

Ta forms into a fine carbide, a nitride, or a carbonitride during hot rolling or annealing and is useful for precipitation strengthening of steel. A Ta content of more than 0.100% reduces workability. Thus, when Ta is contained, the Ta content is 0.100% or less. When Ta is contained, the Ta content is preferably 0.001% or more, more preferably 0.010% or more. When Ta is contained, the Ta content is preferably 0.08% or less, more preferably 0.060% or less.

Mg is an element effective in improving workability through shape control of inclusions. However, a content of Mg of more than 0.050% may adversely affect the cleanliness of steel. Thus, when Mg is contained, the content of Mg is 0.050% or less. When Mg is contained, the content of Mg preferably 0.0005% or more, more preferably 0.001% or more. When Mg is contained, the content of Mg is preferably 0.040% or less, more preferably 0.030% or less.

Zr is an element effective in improving workability through shape control of inclusions. However, a content of Zr of more than 0.050% may adversely affect the cleanliness of steel. Thus, when Zr is contained, the content of Zr is 0.050% or less. When Zr is contained, the content of Zr is preferably 0.0005% or more, more preferably 0.001% or more. When Zr is contained, the content of Zr is preferably 0.040% or less, more preferably 0.030% or less.

REMs are elements effective in improving workability through shape control of sulfides. However, an REM content of more than 0.005% may adversely affect the cleanliness of steel, resulting in low characteristics. Thus, when any of REMs are contained, the content of each REM is preferably 0.005% or less. More preferably, the REM content is 0.004% or less. Since the advantageous effects of the present invention are produced even when the contents of REMs are low, the lower limit of each content is not particularly specified. To more effectively produce the effect of improving workability, the content of each REM is preferably 0.001% or more.

When any of the above-described optional elements is contained in an amount less than the above-described preferred lower limit, the element is regarded as being contained as an incidental impurity.

Hereinafter, an embodiment of a method for manufacturing a steel sheet according to the present invention will be described in detail. It should be noted that temperatures in heating or cooling of a steel slab (steel material), a steel sheet, or the like given below are surface temperatures of the steel slab (steel material), the steel sheet, or the like, unless otherwise stated.

A method for manufacturing a steel sheet according to the present invention includes, for example, a hot rolling step of heating a steel slab having the above-described chemical composition to a temperature range of 1100°C to 1300°C, and performing coiling with a finish rolling temperature (finish rolling delivery temperature) set to 800°C to 950°C, a rolling reduction in finish rolling set to 60% or more, a holding time in a temperature range of 750°C to 600°C in a cooling process from finish rolling delivery to coiling set to 10 s or less, and a coiling temperature set to 600°C or lower.

After the coiling, a hot-rolled steel sheet may have a microstructure including, in terms of area fraction, ferrite: 20% or less, and fresh martensite and bainite in total: 80% or more.

The method also includes a cold rolling step of pickling the hot-rolled steel sheet obtained in the hot rolling step and performing cold rolling at a cumulative rolling reduction of 20% or more.

The method also includes an annealing step of heating a cold-rolled steel sheet obtained in the cold rolling step to an annealing temperature of 750°C to 880°C and performing holding for 30 seconds or more, a quenching step of, after the annealing step, performing cooling to a cooling stop temperature: (Ms - 250°C) to (Ms - 50°C), and a tempering step of, after the quenching step, performing heating to a reheating temperature: 300°C to 500°C and holding for 20 seconds or more.

The method for manufacturing a steel sheet according to the present invention may also include, before the quenching step or after the tempering step, a coating step of performing hot-dip galvanizing or hot-dip galvannealing on a surface of the steel sheet.

First, conditions in the hot rolling step will be described.

Finish rolling temperature: 800°C to 950°C

When the finish rolling temperature (finish rolling delivery temperature) is lower than 800°C, ferrite transformation may occur during rolling, resulting in failure to provide a hot-rolled microstructure of the present invention. Thus, the finish rolling temperature is 800°C or higher, preferably 850°C or higher, more preferably 880°C or higher. On the other hand, when the finish rolling temperature is higher than 950°C, crystal grains may coarsen, forming ununiform ferrite grains after annealing. Thus, the finish rolling temperature is 950°C or lower, preferably 930°C or lower.

Cumulative rolling reduction in finish rolling: 60% or more

A cumulative rolling reduction in finish rolling of 60% or more increases the recrystallization rate during hot rolling, leading to a fine hot-rolled microstructure. Furthermore, by controlling the cooling process from finish rolling delivery to coiling and the coiling temperature, the formation of ferrite is suppressed to provide a fine hot-rolled microstructure composed mainly of fresh martensite and bainite, thus probably increasing ferrite nucleation sites in the annealing step to provide uniform and fine ferrite grains. A cumulative rolling reduction in finish rolling of less than 60% cannot produce these effects. Thus, the cumulative rolling reduction in finish rolling is 60% or more, preferably 70% or more. The upper limit is not particularly specified, but in view of the balance with the rolling reduction in cold rolling, the cumulative rolling reduction in finish rolling is preferably 99% or less, more preferably 96% or less.

Holding time in temperature range of 750°C to 600°C during cooling process from finish rolling delivery to coiling: 10 s or less

In the cooling process from finish rolling delivery to coiling, if the holding time in the temperature range of 750°C to 600°C is more than 10 s, ferrite transformation may proceed, resulting in failure to provide the hot-rolled microstructure of the present invention. Thus, the holding time in the temperature range of 750°C to 600°C is 10 s or less, preferably 8 s or less.

The lower limit is not particularly specified, but in view of the manufacturing cost, the holding time is preferably 1 s or more, more preferably 3 s or more.

Coiling temperature: 600°C or lower

If the coiling temperature is higher than 600°C, ferrite transformation may proceed after coiling, resulting in failure to provide the hot-rolled microstructure of the present invention. In addition, carbides in the hot-rolled steel sheet may coarsen, resulting in failure to provide required strength, because such coarsened carbides do not completely melt during soaking in annealing. Thus, the coiling temperature is 600°C or lower, preferably 580°C or lower. The lower limit of the coiling temperature is not particularly specified, but from the viewpoint of reducing the likelihood of the occurrence of a shape defect of steel sheet and preventing an excessively hardened steel sheet, the coiling temperature is preferably 400°C or higher.

Area fraction of ferrite in hot-rolled steel sheet: 20% or less

In the steel sheet according to the present invention, controlling the microstructure of the hot-rolled steel sheet (hot-rolled sheet) is important for achieving, in a final microstructure, ferrite with an average crystal grain size of 25 um or less and CV × CE satisfying 0.28 or less. In the hot rolling step, by controlling the rolling reduction in finish rolling, the cooling process from finish rolling delivery to coiling, and the coiling temperature, the formation of ferrite is suppressed to provide a hot-rolled steel sheet microstructure in which the area fraction of ferrite is 20% or less, whereby a fine hot-rolled microstructure described below including fresh martensite and bainite with an area fraction of 80% or more is obtained, thus probably increasing ferrite nucleation sites in the annealing step to provide uniform and fine ferrite grains. Thus, the area fraction of ferrite in the hot-rolled steel sheet is 20% or less, preferably 15% or less. The area fraction of ferrite in the hot-rolled steel sheet may be 0%.

Total area fraction of fresh martensite and bainite in hot-rolled steel sheet: 80% or more

In the present invention, controlling the microstructure of the hot-rolled steel sheet to be a microstructure composed mainly of fresh martensite and bainite is important for achieving, in a final microstructure, ferrite with an average crystal grain size of 25 um or less and CV × CE satisfying 0.28 or less for the same reason as above. Thus, the total area fraction of fresh martensite and bainite in the hot-rolled steel sheet is 80% or more, preferably 85% or more. The total area fraction of fresh martensite and bainite in the hot-rolled steel sheet may be 100%.
If the area fraction of ferrite in the hot-rolled steel sheet (hot-rolled sheet) is 20% or less and the total area fraction of fresh martensite and bainite in the hot-rolled sheet is 80% or more, the microstructure, strength, and crashworthiness of the present invention are provided regardless of the types and area fractions of phases other than the above. Examples of phases other than the above include pearlite and cementite. If these phases are excessively increased and the total area fraction of fresh martensite and bainite in the hot-rolled steel sheet falls below 80%, ununiform ferrite grains are formed during annealing, and such grains may be origins of void formation at the time of crash deformation to reduce crashworthiness. The area fraction of these phases is preferably 15% or less.
The hot-rolled steel sheet obtained in the hot rolling step is subjected to a pretreatment such as pickling or degreasing using a generally known method, and then subjected to cold rolling as needed. A condition in the cold rolling step of performing cold rolling will be described.

Cumulative rolling reduction in cold rolling: 20% or more

If the cumulative rolling reduction in cold rolling is less than 20%, recrystallization of ferrite may be not promoted to leave unrecrystallized ferrite, resulting in failure to provide the steel microstructure of the present invention. Thus, the cumulative rolling reduction in cold rolling is 20% or more, preferably 30% or more.
Next, conditions in the annealing step of annealing the cold-rolled steel sheet obtained in the cold rolling step will be described.
Annealing temperature: 750°C to 880°C, holding time: 30 seconds or more
An annealing temperature of lower than 750°C results in insufficient austenite formation and excessive ferrite formation, resulting in failure to provide the steel microstructure of the present invention. Thus, the annealing temperature is 750°C or higher. An annealing temperature of higher than 880°C may result with excessive austenite and insufficient ferrite. Thus, the annealing temperature is 880°C or lower.
A holding time of less than 30 seconds results in insufficient austenite formation and excessive ferrite formation, resulting in failure to provide the steel microstructure of the present invention. Thus, the holding time is 30 seconds or more, preferably 60 seconds or more. The upper limit of the holding time is not particularly specified, but the holding time is preferably 600 seconds or less in order not to impair productivity.
After the annealing step, quenching is performed. A condition in the quenching step will be described.

Cooling stop temperature: (Ms - 250°C) to (Ms - 50°C)

A cooling stop temperature of higher than (Ms - 50°C) results in insufficient tempered martensite formation, resulting in failure to provide the steel microstructure of the present invention. Thus, the cooling stop temperature is (Ms - 50°C) or lower, preferably (Ms - 100°C) or lower. On the other hand, a cooling stop temperature of lower than (Ms - 250°C) may result in excessive tempered martensite and insufficient retained austenite formation. Thus, the cooling stop temperature is (Ms - 250°C) or higher, preferably (Ms - 200°C) or higher.

Ms can be determined by the following formula (3).

$$\text{Ms (°C)} = 539 - 423 \times \{[\text{C\%}] \times 100/(100 - [\alpha \text{ area\%}])\} - 30 \times [\text{Mn\%}] - 12 \times [\text{Cr\%}] - 18 \times [\text{Ni\%}] - 8 \times [\text{Mo\%}]...(3)$$

In the above formula, each element symbol represents the content (mass%) of each element, and an element not contained is expressed as 0.

[$\alpha$ area%] means a ferrite area fraction after annealing. The ferrite area fraction after annealing is preliminarily determined by simulating the heating rate, the annealing temperature, and the holding time in the annealing using a thermodilatometer. [$\alpha$ area%] is regarded as the same as the area fraction of ferrite contained in a final steel sheet that has been through the quenching step and the tempering step of the present invention after annealing.

After the quenching step, tempering is performed. Conditions in the tempering step will be described.

Tempering temperature (reheating temperature): 300°C to 500°C, holding time: 20 seconds or more

At lower than 300°C, martensite is tempered insufficiently, resulting in a large difference in hardness between ferrite and tempered martensite, so that tempered martensite does not deform following ferrite during primary processing, and voids are likely to occur at the interface between tempered martensite and ferrite, thus probably resulting in low crashworthiness. In addition, bainite transformation may be insufficient, resulting in failure to provide the steel microstructure and fracture resistance of the present invention. Thus, the tempering temperature (reheating temperature) is 300°C or higher, preferably 350°C or higher. On the other hand, at a tempering temperature (reheating temperature) of higher than 500°C, ferrite is formed excessively, resulting in failure to provide the steel microstructure of the present invention. In addition, bainite transformation may be insufficient, resulting in failure to provide the steel microstructure and fracture resistance of the present invention. Thus, the tempering temperature (reheating temperature) is 500°C or lower, preferably 450°C or lower.

If the holding time is less than 20 seconds, martensite is tempered insufficiently, resulting in failure to provide the fracture resistance of the present invention. In addition, bainite transformation may be insufficient, resulting in failure to provide the steel microstructure and fracture resistance of the present invention. Thus, the holding time is 20 seconds or more, preferably 30 seconds or more. The upper limit of the holding time is not particularly specified, but from the viewpoint of productivity and suppression of excessive bainite transformation, the holding time is preferably 500 seconds or less.

Next, conditions in the coating step will be described.

In the method for manufacturing a steel sheet according to the present invention, electrogalvanizing, hot-dip galvanizing, or hot-dip galvannealing may be performed on a surface of the steel sheet after the annealing step and before the quenching step, or after the tempering step.

The coating step after the annealing step and before the quenching step preferably includes performing holding in a temperature range of 300°C to 500°C for 0 to 300 s before coating.

If this temperature range is lower than 300°C, martensitic transformation may occur, and C may be excessively concentrated in non-transformed austenite to cause decomposition during coating or alloying by coating, reducing retained austenite. On the other hand, if the temperature range is higher than 500°C, ferrite may be formed, resulting in failure to provide the steel microstructure of the present invention.

If the holding time is more than 300 s, bainite transformation may proceed excessively, resulting in failure to provide the steel microstructure and fracture resistance of the present invention.

Thus, in the present invention, the coating step after the annealing step and before the quenching step preferably includes performing holding in a temperature range of 300°C to 500°C for 0 to 300 s before coating.

The electrogalvanizing treatment is preferably performed by applying a current to the steel sheet immersed in a zinc solution at 50°C to 60°C.

The hot-dip galvanizing treatment is preferably performed in such a manner that the steel sheet obtained as described above is immersed in a galvanizing bath at 440°C or higher and 500°C or lower, and then the coating weight is adjusted by, for example, gas wiping. The hot-dip galvanizing treatment step may be followed by an alloying step of performing an alloying treatment. When the alloying treatment is performed on a zinc coating, the zinc coating is preferably alloyed while being held in a temperature range of 450°C or higher and 580°C or lower for 1 second or more 180 seconds or less.

The steel sheet subjected to the hot-dip galvanizing treatment or the hot-dip galvannealing treatment may be subjected to temper rolling for shape correction, surface roughness adjustment, and other purposes. In the temper rolling, a temper rolling reduction of more than 0.5% may result in lower bendability due to surface hardening, and thus the temper rolling rate is preferably 0.5% or less, more preferably 0.3% or less. Various coating treatments such as resin coating and oil coating may also be performed.

Other conditions in the manufacturing method are not particularly specified, but following conditions are preferred.

A slab is preferably produced by continuous casting in order to prevent macrosegregation and can also be produced by ingot casting or thin slab casting. When the slab is hot rolled, the hot rolling may be performed in such a manner that the slab is cooled to room temperature once and then reheated. Alternatively, the hot rolling may be performed in such a manner that the slab is charged into a heating furnace without being cooled to room temperature. An energy-saving process in which short-period heat retention is performed and the hot rolling is then immediately performed is also applicable. When the slab is heated, it is preferably heated to 1100°C or higher in order to prevent an increase in rolling force and dissolve carbides. To prevent an increase in scale loss, the slab heating temperature is preferably 1300°C or lower.

When the slab is hot rolled, a rough bar obtained by rough rolling may be heated so that troubles during rolling are prevented when the slab heating temperature is lowered. A so-called continuous rolling process in which rough bars are joined together and finish rolling is continuously performed is also applicable. For reduction of rolling force and uniformization of shape and material quality, it is preferable to perform lubricated rolling in which the coefficient of friction is 0.10 to 0.25 in all or some passes of finish rolling.

From the coiled steel sheet, scales may be removed by, for example, pickling. After the pickling, cold rolling, annealing, and galvanizing are performed under the above-described conditions.

Next, a member according to the present invention and a method for manufacturing the member will be described.

The member according to the present invention is obtained by subjecting the steel sheet according to the present invention to at least one of forming and welding. The method for manufacturing the member according to the present invention includes a step of subjecting a steel sheet manufactured by the method for manufacturing a steel sheet according to the present invention to at least one of forming and welding.

The steel sheet according to the present invention has high strength and is excellent in crashworthiness. Thus, the member obtained using the steel sheet according to the present invention also has high strength, is excellent in crashworthiness, and is resistant to member fracture at the time of crash deformation. Thus, the member according to the present invention is suitable for use as an energy-absorbing member of an automotive part.

For the forming, any common forming method such as press forming can be used without limitation. For the welding, any common welding such as spot welding or arc welding can be used without limitation.

EXAMPLES

The present invention will be specifically described with reference to Examples. The scope of the present invention is not limited to the following Examples.

[Example 1]

Steels having chemical compositions shown in Table 1 were obtained by steelmaking in a vacuum melting furnace and bloomed into steel slabs. These steel slabs were heated to 1100°C to 1300°C and subjected to hot rolling, cold rolling, annealing, quenching, tempering, and heat treatment under the conditions shown in Table 2 to manufacture steel sheets. When the steel sheets were manufactured under the conditions shown in Table 2, some of the steel sheets were subjected to a coating treatment before the quenching step or after the tempering step. In a hot-dip galvanizing treatment, each steel sheet was immersed in a plating bath to form a hot-dip galvanized layer (GI) with a coating weight of 10 to 100 g/m$^2$. In hot-dip galvannealing, after a hot-dip galvanized layer was formed on each steel sheet, an alloying treatment was performed to form a hot-dip galvannealed layer (GA). The final steel sheets each had a thickness of 1.2 mm.

[Table 1]

| Steel | Chemical composition (mass%) | | | | | | | | | | | | | | | | | | | | | | | | CE (%) |
|---|---|---|---|---|---|---|---|---|---|---|---|---|---|---|---|---|---|---|---|---|---|---|---|---|---|
| | C | Si | Mn | P | S | Sol. Al | N | Cr | Mo | V | Ti | Nb | B | Ni | Cu | Sb | Sn | As | Ca | W | Ta | Mg | Zr | REM | |
| A | 0.12 | 1.50 | 2.7 | 0.009 | 0.010 | 0.035 | 0.0030 | 0 | 0.060 | 0 | 0.025 | 0 | 0.0015 | 0 | 0 | 0 | 0 | 0 | 0 | 0 | 0 | 0 | 0 | 0 | 0.65 |
| B | 0.07 | 1.90 | 3.3 | 0.020 | 0.010 | 0.022 | 0.0035 | 0 | 0 | 0 | 0 | 0 | 0 | 0 | 0 | 0 | 0 | 0 | 0 | 0 | 0 | 0 | 0 | 0 | 0.70 |
| C | 0.20 | 1.30 | 2.3 | 0.030 | 0.020 | 0.050 | 0.0022 | 0 | 0 | 0 | 0 | 0 | 0 | 0 | 0 | 0 | 0 | 0 | 0 | 0 | 0 | 0 | 0 | 0 | 0.64 |
| D | 0.17 | 0.10 | 3.3 | 0.030 | 0.020 | 0.043 | 0.0042 | 0 | 0 | 0 | 0 | 0 | 0 | 0 | 0 | 0 | 0 | 0 | 0 | 0 | 0 | 0 | 0 | 0 | 0.72 |
| E | 0.09 | 2.00 | 3.1 | 0.010 | 0.010 | 0.061 | 0.0016 | 0 | 0 | 0 | 0 | 0 | 0 | 0 | 0 | 0 | 0 | 0 | 0 | 0 | 0 | 0 | 0 | 0 | 0.69 |
| F | 0.19 | 0.50 | 1.5 | 0.020 | 0.010 | 0.018 | 0.0021 | 0 | 0 | 0 | 0 | 0 | 0 | 0 | 0 | 0 | 0 | 0 | 0 | 0 | 0 | 0 | 0 | 0 | 0.46 |
| G | 0.08 | 1.50 | 4.0 | 0.030 | 0.010 | 0.026 | 0.0040 | 0 | 0 | 0 | 0 | 0 | 0 | 0 | 0 | 0 | 0 | 0 | 0 | 0 | 0 | 0 | 0 | 0 | 0.81 |
| H | 0.08 | 0.70 | 2.2 | 0.050 | 0.010 | 0.012 | 0.0029 | 0 | 0 | 0 | 0 | 0 | 0 | 0 | 0 | 0 | 0 | 0 | 0 | 0 | 0 | 0 | 0 | 0 | 0.48 |
| I | 0.08 | 1.30 | 2.0 | 0.030 | 0.050 | 0.029 | 0.0026 | 0 | 0 | 0 | 0 | 0 | 0 | 0 | 0 | 0 | 0 | 0 | 0 | 0 | 0 | 0 | 0 | 0 | 0.47 |
| J | 0.16 | 1.60 | 2.6 | 0.010 | 0.030 | 0.005 | 0.0038 | 0 | 0 | 0 | 0 | 0 | 0 | 0 | 0 | 0 | 0 | 0 | 0 | 0 | 0 | 0 | 0 | 0 | 0.66 |
| K | 0.11 | 1.80 | 2.7 | 0.040 | 0.010 | 0.100 | 0.0027 | 0 | 0 | 0 | 0 | 0 | 0 | 0 | 0 | 0 | 0 | 0 | 0 | 0 | 0 | 0 | 0 | 0 | 0.64 |
| L | 0.15 | 1.40 | 2.4 | 0.030 | 0.010 | 0.011 | 0.0100 | 0 | 0 | 0 | 0 | 0 | 0 | 0 | 0 | 0 | 0 | 0 | 0 | 0 | 0 | 0 | 0 | 0 | 0.61 |
| M | 0.08 | 1.50 | 2.3 | 0.020 | 0.020 | 0.034 | 0.0028 | 0 | 0.100 | 0 | 0.019 | 0 | 0.0018 | 0 | 0 | 0 | 1.000 | 0 | 0 | 0 | 0 | 0 | 0 | 0 | 0.55 |
| N | 0.18 | 1.45 | 2.8 | 0.030 | 0.020 | 0.039 | 0.0034 | 0 | 0 | 0 | 0.021 | 0 | 0.0015 | 0 | 0 | 0 | 0.005 | 0 | 0 | 0 | 0 | 0 | 0 | 0 | 0.71 |
| O | 0.08 | 1.00 | 3.3 | 0.020 | 0.020 | 0.050 | 0.0018 | 0.005 | 0 | 0 | 0 | 0 | 0 | 0 | 0 | 0 | 1.000 | 0 | 0 | 0 | 0 | 0 | 0 | 0 | 0.67 |
| P | 0.13 | 1.30 | 2.4 | 0.040 | 0.010 | 0.055 | 0.0064 | 1.000 | 0 | 0 | 0 | 0 | 0.0015 | 0 | 0 | 0 | 0 | 0 | 0 | 0 | 0 | 0 | 0 | 0.005 | 0.78 |
| Q | 0.10 | 1.60 | 3.0 | 0.010 | 0.020 | 0.022 | 0.0051 | 0 | 0.005 | 0 | 0 | 0 | 0 | 0 | 0 | 1.000 | 0 | 0 | 0 | 0 | 0 | 0 | 0 | 0 | 0.67 |
| R | 0.13 | 1.30 | 2.9 | 0.040 | 0.010 | 0.008 | 0.0046 | 0 | 0.500 | 0 | 0 | 0 | 0 | 0 | 0 | 0.031 | 0.005 | 0 | 0 | 0 | 0 | 0 | 0 | 0 | 0.79 |
| S | 0.14 | 1.90 | 2.4 | 0.020 | 0.010 | 0.011 | 0.0033 | 0 | 0 | 0.005 | 0 | 0.031 | 0 | 0 | 0 | 0 | 0 | 0 | 0.0010 | 0 | 0 | 0 | 0 | 0 | 0.62 |
| T | 0.15 | 1.10 | 2.5 | 0.010 | 0.010 | 0.034 | 0.0028 | 0 | 0 | 0.500 | 0 | 0 | 0 | 0 | 0.041 | 0.005 | 0 | 0 | 0 | 0 | 0 | 0 | 0 | 0 | 0.65 |
| U | 0.10 | 0.40 | 3.0 | 0.020 | 0.020 | 0.082 | 0.0029 | 0 | 0 | 0 | 0.005 | 0 | 0 | 0 | 0 | 0 | 0 | 0.0020 | 0.500 | 0 | 0 | 0 | 0 | 0 | 0.62 |
| V | 0.17 | 1.40 | 2.4 | 0.030 | 0.010 | 0.024 | 0.0061 | 0.020 | 0 | 0 | 0.500 | 0 | 0.0020 | 0 | 0 | 0 | 0 | 0.0050 | 0 | 0 | 0 | 0 | 0 | 0 | 0.63 |
| W | 0.10 | 1.60 | 2.9 | 0.010 | 0.010 | 0.031 | 0.0041 | 0 | 0 | 0 | 0 | 0.005 | 0 | 0 | 0 | 0.009 | 0 | 0 | 0 | 0.100 | 0 | 0 | 0 | 0 | 0.65 |
| X | 0.13 | 1.70 | 2.5 | 0.020 | 0.020 | 0.072 | 0.0031 | 0 | 0.150 | 0 | 0 | 0.500 | 0 | 0 | 0 | 0 | 0 | 0 | 0.005 | 0 | 0 | 0 | 0 | 0 | 0.66 |
| Y | 0.10 | 1.60 | 3.2 | 0.010 | 0.020 | 0.020 | 0.0029 | 0 | 0 | 0 | 0 | 0 | 0.0003 | 0 | 0.005 | 0 | 0 | 0 | 0 | 0 | 0 | 0.050 | 0 | 0 | 0.70 |
| Z | 0.12 | 1.50 | 2.6 | 0.020 | 0.010 | 0.036 | 0.0025 | 0 | 0 | 0 | 0.210 | 0 | 0.0050 | 0 | 0 | 0 | 0 | 0 | 0 | 0 | 0.005 | 0 | 0 | 0 | 0.62 |
| AA | 0.15 | 1.20 | 2.4 | 0.010 | 0.010 | 0.055 | 0.0034 | 0 | 0 | 0.100 | 0 | 0 | 0 | 0.005 | 0 | 0 | 0 | 0 | 0 | 0 | 0 | 0.050 | 0 | 0 | 0.61 |
| AB | 0.17 | 1.00 | 2.6 | 0.010 | 0.020 | 0.043 | 0.0055 | 0 | 0.200 | 0 | 0 | 0 | 0 | 1.000 | 0 | 0 | 0 | 0 | 0 | 0 | 0 | 0.005 | 0 | 0 | 0.72 |
| AC | 0.18 | 1.10 | 3.1 | 0.010 | 0.040 | 0.050 | 0.0034 | 0 | 0 | 0 | 0.120 | 0 | 0 | 0 | 0.005 | 0 | 0 | 0 | 0 | 0 | 0 | 0 | 0 | 0.001 | 0.74 |
| AD | 0.08 | 0.40 | 3.2 | 0.020 | 0.030 | 0.041 | 0.0023 | 0 | 0 | 0 | 0 | 0 | 0 | 1.000 | 0 | 0 | 0 | 0 | 0 | 0 | 0 | 0.005 | 0 | 0 | 0.63 |
| AE | 0.05 | 1.70 | 2.7 | 0.040 | 0.040 | 0.025 | 0.0026 | 0 | 0 | 0 | 0 | 0 | 0 | 0 | 0 | 0 | 0 | 0 | 0 | 0 | 0 | 0 | 0 | 0 | 0.57 |
| AF | 0.21 | 1.90 | 3.0 | 0.010 | 0.010 | 0.044 | 0.0029 | 0 | 0 | 0 | 0 | 0 | 0 | 0 | 0 | 0 | 0 | 0 | 0 | 0 | 0 | 0 | 0 | 0 | 0.79 |
| AG | 0.14 | 0.09 | 2.7 | 0.020 | 0.010 | 0.035 | 0.0031 | 0 | 0 | 0 | 0 | 0 | 0 | 0 | 0 | 0 | 0 | 0 | 0 | 0 | 0 | 0 | 0 | 0 | 0.59 |
| AH | 0.12 | 1.30 | 1.4 | 0.010 | 0.010 | 0.072 | 0.0041 | 0 | 0 | 0 | 0 | 0 | 0 | 0 | 0 | 0 | 0 | 0 | 0 | 0 | 0 | 0 | 0 | 0 | 0.41 |
| AI | 0.15 | 0.90 | 4.1 | 0.010 | 0.010 | 0.062 | 0.0025 | 0 | 0 | 0 | 0 | 0 | 0 | 0 | 0 | 0 | 0 | 0 | 0 | 0 | 0 | 0 | 0 | 0 | 0.87 |
| AJ | 0.16 | 1.20 | 2.8 | 0.105 | 0.010 | 0.030 | 0.0036 | 0 | 0 | 0 | 0 | 0 | 0 | 0 | 0 | 0 | 0 | 0 | 0 | 0 | 0 | 0 | 0 | 0 | 0.68 |
| AK | 0.12 | 1.00 | 2.6 | 0.010 | 0.060 | 0.022 | 0.0060 | 0 | 0 | 0 | 0 | 0 | 0 | 0 | 0 | 0 | 0 | 0 | 0 | 0 | 0 | 0 | 0 | 0 | 0.60 |
| AL | 0.08 | 0.80 | 2.1 | 0.010 | 0.010 | 0.105 | 0.0050 | 0 | 0 | 0 | 0 | 0 | 0 | 0 | 0 | 0 | 0 | 0 | 0 | 0 | 0 | 0 | 0 | 0 | 0.46 |
| AM | 0.08 | 1.20 | 3.1 | 0.010 | 0.010 | 0.041 | 0.0105 | 0 | 0 | 0 | 0 | 0 | 0 | 0 | 0 | 0 | 0 | 0 | 0 | 0 | 0 | 0 | 0 | 0 | 0.65 |

· The balance other than the above is Fe and incidental impurities.

[Table 2]

| Steel sheet No. | Steel type | Slab heating temperature (°C) | Cumulative rolling reduction (%) | Finish rolling temperature (°C) | Holding time at 750°C to 600°C (s) | Coiling temperature (°C) | V(F) (%) | V(FM-B) (%) | Cumulative rolling reduction (%) | Annealing temperature (°C) | Holding time (s) | Holding before coating Temperature (°C) | Holding before coating Time (s) | Alloying Temperature (°C) | Alloying Time (s) | Type | Ms (°C) | Ms-50 (°C) | Ms-250 (°C) | Cooling stop temperature (°C) | Tempering temperature (°C) | Holding time (s) | Alloying Temperature (°C) | Alloying Time (s) | Type | Remarks |
|---|---|---|---|---|---|---|---|---|---|---|---|---|---|---|---|---|---|---|---|---|---|---|---|---|---|---|
| 1 | A | 1250 | 95 | 900 | 6 | 550 | 0 | 100 | 55 | 840 | 100 | 350 | 30 | - | - | GA | 393 | 343 | 143 | 200 | 400 | 50 | - | - | - | Inventive Example |
| 2 | A | 1250 | 60 | 850 | 4 | 570 | 0 | 100 | 45 | 790 | 190 | 300 | 30 | - | - | GI | 373 | 323 | 123 | 190 | 370 | 110 | - | - | - | Inventive Example |
| 3 | A | 1250 | 90 | 950 | 5 | 540 | 0 | 100 | 40 | 800 | 480 | - | - | - | - | - | 384 | 334 | 134 | 180 | 320 | 70 | - | - | - | Inventive Example |
| 4 | A | 1250 | 90 | 850 | 3 | 560 | 16 | 83 | 70 | 820 | 150 | - | - | - | - | - | 388 | 338 | 138 | 160 | 380 | 120 | 550 | 20 | GA | Inventive Example |
| 5 | A | 1250 | 85 | 920 | 10 | 580 | 19 | 81 | 50 | 790 | 230 | 400 | 30 | - | - | EG | 374 | 324 | 124 | 180 | 320 | 60 | - | - | - | Inventive Example |
| 6 | A | 1250 | 95 | 880 | 6 | 600 | 19 | 80 | 30 | 840 | 290 | 350 | 30 | 550 | 10 | GA | 398 | 348 | 148 | 210 | 340 | 170 | - | - | - | Inventive Example |
| 7 | A | 1250 | 90 | 940 | 5 | 550 | 0 | 96 | 45 | 770 | 320 | - | - | - | - | - | 362 | 312 | 112 | 310 | 400 | 20 | - | - | GI | Inventive Example |
| 8 | A | 1250 | 85 | 890 | 6 | 580 | 9 | 89 | 55 | 810 | 30 | - | - | - | - | - | 362 | 312 | 112 | 180 | 350 | 110 | 530 | 30 | GA | Inventive Example |
| 9 | A | 1250 | 90 | 860 | 3 | 480 | 0 | 99 | 40 | 800 | 210 | 450 | 30 | 520 | 130 | GA | 379 | 329 | 129 | 320 | 490 | 30 | - | - | - | Inventive Example |
| 10 | A | 1250 | 90 | 900 | 5 | 560 | 0 | 100 | 50 | 840 | 190 | - | - | - | - | - | 396 | 346 | 146 | 150 | 450 | 230 | - | - | - | Inventive Example |
| 11 | A | 1250 | 85 | 880 | 4 | 510 | 0 | 100 | 65 | 780 | 90 | 500 | 300 | 530 | 30 | GA | 358 | 308 | 108 | 270 | 500 | 70 | - | - | - | Comparative Example |
| 12 | A | 1250 | 75 | 900 | 5 | 580 | 9 | 86 | 40 | 770 | 190 | 350 | 5 | 510 | 160 | GA | 358 | 308 | 108 | 290 | 300 | 260 | - | - | - | Comparative Example |
| 13 | A | 1250 | 55 | 860 | 7 | 590 | 15 | 81 | 20 | 810 | 380 | 350 | 30 | 530 | 30 | GA | 387 | 337 | 137 | 200 | 380 | 60 | - | - | - | Comparative Example |
| 14 | B | 1100 | 95 | 890 | 5 | 520 | 0 | 99 | 70 | 880 | 90 | - | - | - | - | - | 407 | 357 | 157 | 300 | 450 | 200 | - | - | GI | Comparative Example |
| 15 | B | 1250 | 85 | 840 | 6 | 570 | 9 | 89 | 55 | 890 | 70 | 350 | 20 | 530 | 20 | GA | 407 | 357 | 157 | 210 | 460 | 210 | - | - | - | Comparative Example |
| 16 | C | 1300 | 95 | 920 | 6 | 460 | 0 | 100 | 40 | 750 | 200 | 350 | 20 | - | - | GI | 304 | 254 | 54 | 130 | 370 | 260 | - | - | - | Comparative Example |
| 17 | C | 1250 | 90 | 960 | 7 | 530 | 0 | 100 | 60 | 800 | 330 | - | - | - | - | - | 367 | 317 | 117 | 230 | 420 | 60 | 500 | 30 | GA | Comparative Example |
| 18 | D | 1150 | 60 | 920 | 5 | 450 | 0 | 98 | 30 | 770 | 40 | - | - | - | - | - | 357 | 307 | 107 | 270 | 380 | 130 | 530 | 40 | GA | Inventive Example |
| 19 | D | 1250 | 85 | 790 | 7 | 590 | 24 | 72 | 45 | 750 | 50 | 350 | 40 | - | - | GI | 343 | 293 | 93 | 220 | 480 | 360 | - | - | - | Comparative Example |
| 20 | E | 1200 | 90 | 930 | 4 | 460 | 0 | 100 | 75 | 780 | 490 | - | - | - | - | - | 377 | 327 | 127 | 300 | 370 | 450 | - | - | - | Inventive Example |
| 21 | E | 1250 | 90 | 900 | 11 | 470 | 5 | 93 | 23 | 780 | 140 | 350 | 50 | 520 | 30 | GA | 388 | 318 | 118 | 230 | 420 | 110 | - | - | - | Inventive Example |
| 22 | F | 1250 | 95 | 870 | 6 | 560 | 0 | 100 | 45 | 780 | 120 | - | - | - | - | - | 377 | 327 | 127 | 200 | 490 | 290 | 520 | 30 | GA | Inventive Example |
| 23 | F | 1250 | 95 | 940 | 6 | 610 | 24 | 71 | 65 | 760 | 150 | 350 | 30 | - | - | GI | 364 | 314 | 114 | 130 | 320 | 70 | - | - | - | Comparative Example |
| 24 | G | 1250 | 95 | 880 | 7 | 450 | 0 | 100 | 30 | 810 | 400 | 350 | 30 | 530 | 30 | GA | 377 | 327 | 127 | 250 | 410 | 360 | - | - | - | Inventive Example |
| 25 | G | 1250 | 80 | 930 | 8 | 490 | 2 | 98 | 15 | 800 | 130 | 350 | 60 | - | - | GI | 371 | 321 | 121 | 280 | 340 | 40 | - | - | - | Comparative Example |
| 26 | H | 1250 | 90 | 880 | 9 | 470 | 5 | 95 | 40 | 800 | 100 | - | - | - | - | - | 424 | 374 | 174 | 200 | 370 | 90 | 530 | 30 | GA | Inventive Example |
| 27 | H | 1250 | 80 | 900 | 5 | 530 | 0 | 100 | 40 | 740 | 200 | 350 | 100 | 520 | 20 | GA | 392 | 342 | 142 | 180 | 480 | 130 | - | - | - | Inventive Example |
| 28 | I | 1250 | 90 | 930 | 6 | 580 | 9 | 90 | 50 | 790 | 210 | 350 | 30 | - | - | - | 420 | 370 | 170 | 190 | 480 | 110 | - | - | - | Inventive Example |
| 29 | I | 1250 | 85 | 870 | 6 | 540 | 0 | 98 | 60 | 810 | 25 | 350 | 40 | 540 | 30 | GA | 405 | 355 | 155 | 300 | 430 | 330 | - | - | - | Comparative Example |
| 30 | J | 1250 | 90 | 800 | 5 | 480 | 0 | 100 | 50 | 800 | 280 | - | - | - | - | - | 366 | 316 | 116 | 130 | 370 | 290 | 530 | 50 | GA | Inventive Example |
| 31 | J | 1250 | 90 | 920 | 7 | 500 | 0 | 100 | 60 | 790 | 25 | 350 | 50 | - | - | GI | 311 | 261 | 61 | 270 | 450 | 60 | - | - | - | Comparative Example |
| 32 | K | 1250 | 90 | 880 | 5 | 570 | 0 | 100 | 30 | 840 | 70 | - | - | - | - | - | 392 | 342 | 142 | 150 | 410 | 150 | 540 | 30 | GA | Inventive Example |
| 33 | K | 1250 | 95 | 930 | 5 | 550 | 0 | 100 | 55 | 860 | 210 | 350 | 20 | - | - | - | 405 | 355 | 155 | 150 | 400 | 60 | - | - | - | Comparative Example |
| 34 | L | 1250 | 95 | 890 | 6 | 520 | 0 | 97 | 60 | 820 | 180 | - | - | - | - | - | 389 | 339 | 139 | 180 | 380 | 60 | 510 | 20 | GA | Inventive Example |
| 35 | L | 1250 | 90 | 860 | 6 | 490 | 0 | 100 | 40 | 770 | 90 | 350 | 40 | - | - | GI | 338 | 288 | 88 | 280 | 510 | 120 | - | - | - | Comparative Example |
| 36 | M | 1250 | 85 | 920 | 6 | 570 | 0 | 100 | 60 | 790 | 150 | 350 | 30 | 530 | 30 | GA | 404 | 354 | 154 | 220 | 420 | 50 | - | - | - | Inventive Example |
| 37 | M | 1250 | 85 | 880 | 5 | 540 | 0 | 100 | 60 | 800 | 130 | - | - | - | - | - | 408 | 358 | 158 | 210 | 410 | 40 | 530 | 20 | GA | Inventive Example |
| 38 | M | 1250 | 90 | 900 | 6 | 530 | 0 | 100 | 55 | 820 | 90 | - | - | - | - | - | 414 | 364 | 164 | 210 | 430 | 240 | - | - | - | Inventive Example |
| 39 | M | 1250 | 95 | 910 | 4 | 480 | 0 | 99 | 65 | 780 | 290 | - | - | - | - | - | 403 | 353 | 153 | 350 | 290 | 160 | - | - | GI | Inventive Example |
| 40 | N | 1250 | 95 | 880 | 7 | 520 | 0 | 100 | 55 | 830 | 120 | 350 | 60 | 530 | 30 | GA | 368 | 318 | 118 | 290 | 380 | 50 | - | - | - | Inventive Example |
| 41 | N | 1250 | 80 | 920 | 6 | 520 | 0 | 100 | 60 | 840 | 70 | - | - | - | - | - | 370 | 320 | 120 | 190 | 420 | 40 | 530 | 80 | GA | Inventive Example |
| 42 | N | 1250 | 90 | 880 | 5 | 540 | 0 | 100 | 60 | 830 | 100 | - | - | - | - | - | 367 | 317 | 117 | 210 | 440 | 250 | - | - | - | Comparative Example |
| 43 | N | 1250 | 95 | 880 | 5 | 550 | 0 | 100 | 45 | 760 | 140 | 350 | 80 | 550 | 30 | GA | 309 | 259 | 59 | 250 | 490 | 18 | - | - | - | Comparative Example |
| 44 | O | 1250 | 90 | 900 | 6 | 510 | 19 | 80 | 55 | 820 | 210 | - | - | - | - | - | 401 | 351 | 151 | 290 | 310 | 180 | - | - | GI | Inventive Example |
| 45 | P | 1250 | 90 | 890 | 5 | 510 | 0 | 100 | 40 | 810 | 200 | 350 | 200 | 510 | 30 | GA | 375 | 325 | 125 | 150 | 420 | 60 | - | - | - | Inventive Example |
| 46 | Q | 1250 | 90 | 890 | 7 | 500 | 0 | 99 | 50 | 840 | 280 | - | - | - | - | - | 400 | 350 | 150 | 180 | 370 | 460 | 530 | 30 | GA | Inventive Example |
| 47 | R | 1250 | 85 | 920 | 6 | 550 | 0 | 100 | 50 | 860 | 120 | 350 | 30 | - | - | - | 387 | 337 | 137 | 260 | 350 | 300 | - | - | - | Inventive Example |
| 48 | S | 1250 | 95 | 900 | 6 | 490 | 0 | 100 | 55 | 770 | 220 | - | - | - | - | - | 349 | 299 | 99 | 280 | 430 | 110 | 530 | 30 | GA | Inventive Example |
| 49 | T | 1250 | 95 | 870 | 6 | 550 | 0 | 98 | 70 | 780 | 250 | 350 | 30 | 550 | 50 | GA | 395 | 345 | 145 | 220 | 440 | 400 | - | - | - | Inventive Example |
| 50 | U | 1250 | 90 | 880 | 6 | 450 | 0 | 100 | 70 | 780 | 250 | 350 | 30 | 550 | 50 | GA | 395 | 345 | 145 | 220 | 440 | 400 | - | - | - | Inventive Example |
| 51 | V | 1250 | 95 | 900 | 6 | 580 | 9 | 91 | 60 | 860 | 160 | 350 | 40 | - | - | GI | 378 | 328 | 128 | 180 | 420 | 70 | - | - | - | Inventive Example |
| 52 | W | 1250 | 90 | 930 | 5 | 510 | 0 | 99 | 50 | 780 | 410 | 350 | 60 | - | - | - | 380 | 330 | 130 | 170 | 390 | 50 | - | - | - | Inventive Example |
| 53 | X | 1250 | 95 | 870 | 6 | 560 | 0 | 100 | 50 | 860 | 320 | 350 | 20 | 550 | 30 | GA | 373 | 323 | 123 | 270 | 390 | 490 | - | - | - | Inventive Example |
| 54 | Y | 1250 | 95 | 910 | 6 | 520 | 0 | 97 | 45 | 820 | 270 | 350 | 30 | 530 | 30 | GA | 389 | 339 | 139 | 270 | 460 | 180 | - | - | - | Inventive Example |
| 55 | Z | 1250 | 95 | 920 | 4 | 470 | 0 | 100 | 55 | 790 | 80 | 350 | 30 | 530 | 20 | GA | 359 | 309 | 109 | 160 | 430 | 160 | - | - | - | Inventive Example |
| 56 | AA | 1250 | 90 | 910 | 7 | 540 | 0 | 100 | 50 | 770 | 100 | - | - | - | - | - | 347 | 297 | 97 | 260 | 430 | 160 | 550 | 40 | GA | Inventive Example |
| 57 | AB | 1250 | 95 | 880 | 5 | 470 | 0 | 100 | 65 | 780 | 110 | 350 | 100 | 520 | 40 | GA | 352 | 302 | 102 | 200 | 380 | 110 | - | - | - | Inventive Example |
| 58 | AC | 1250 | 80 | 910 | 6 | 510 | 0 | 100 | 50 | 810 | 310 | 350 | 100 | - | - | - | 351 | 301 | 101 | 170 | 340 | 70 | - | - | - | Inventive Example |
| 59 | AD | 1250 | 90 | 940 | 6 | 480 | 0 | 100 | 55 | 760 | 310 | 350 | 30 | - | - | GI | 360 | 310 | 110 | 200 | 400 | 130 | - | - | - | Comparative Example |
| 60 | AE | 1250 | 95 | 900 | 5 | 550 | 0 | 100 | 70 | 790 | 550 | 350 | 70 | - | - | - | 421 | 371 | 171 | 260 | 440 | 60 | - | - | - | Comparative Example |
| 61 | AF | 1250 | 95 | 890 | 6 | 570 | 0 | 96 | 55 | 830 | 160 | 350 | 50 | 510 | 30 | GA | 349 | 299 | 99 | 250 | 400 | 380 | - | - | - | Comparative Example |
| 62 | AG | 1250 | 90 | 930 | 5 | 520 | 0 | 99 | 40 | 790 | 60 | 350 | 70 | - | - | GA | 393 | 343 | 143 | 150 | 400 | 50 | - | - | - | Comparative Example |
| 63 | AH | 1250 | 95 | 870 | 6 | 530 | 0 | 100 | 55 | 770 | 350 | 350 | 30 | 530 | 30 | GA | 393 | 343 | 143 | 170 | 480 | 200 | - | - | - | Comparative Example |
| 64 | AI | 1250 | 90 | 900 | 4 | 510 | 0 | 100 | 50 | 780 | 90 | 350 | 30 | - | - | GI | 376 | 326 | 126 | 260 | 440 | 40 | - | - | - | Comparative Example |
| 65 | AJ | 1250 | 95 | 920 | 5 | 540 | 0 | 98 | 45 | 820 | 90 | 350 | 100 | - | - | - | 376 | 326 | 126 | 120 | 430 | 460 | - | - | - | Comparative Example |
| 66 | AK | 1250 | 90 | 870 | 7 | 500 | 0 | 100 | 40 | 790 | 60 | - | - | - | - | - | 379 | 329 | 129 | 210 | 430 | 210 | - | - | GI | Comparative Example |
| 67 | AL | 1250 | 95 | 880 | 6 | 540 | 0 | 100 | 55 | 770 | 100 | - | - | - | - | - | 411 | 361 | 161 | 230 | 390 | 200 | - | - | - | Comparative Example |
| 68 | AM | 1250 | 90 | 870 | 6 | 520 | 0 | 100 | 65 | 820 | 310 | 350 | 30 | 510 | 30 | GA | 405 | 355 | 155 | 250 | 400 | 190 | - | - | - | Comparative Example |

The steel sheets obtained were subjected to skin pass rolling at a rolling reduction of 0.2%, and then the area fractions of ferrite (F), bainite (B), fresh martensite (FM), tempered martensite (TM), and retained austenite (RA) were determined according to the following method. In addition, when the steel sheets were each bent by 90° in a rolling (L) direction with a width (C) direction as an axis at radius of curvature/sheet thickness: 4.2 and then unbent to be flattened again according to the method described above, the ratio ($NF_{void}$/NF) of ferrite grains having a void at an interface to all ferrite grains in an L section in a region extending by 0 to 50 um from a steel sheet surface on a compressive-tensile deformation side was also measured.

$NF_{void}$/NF was measured in the following manner. After the steel sheet was bent by 90° in a rolling (L) direction with a width (C) direction as an axis at radius of curvature/sheet thickness: 4.2 and unbent to be flattened again, a thickness cross-section was polished, and an L section in a region extending by 0 to 50 um from a steel sheet surface on a compressive-tensile side was observed. In the L section, three view areas were micrographed with a scanning electron microscope (SEM) at a magnification of 2000X, and from image data obtained, the number of all ferrite grains and the number of ferrite grains having a void at an interface in the view areas were counted using Image-Pro manufactured by Media Cybernetics to determine their ratio. $NF_{void}$/NF was defined as the average of the three view areas. Voids were darker black than ferrite and clearly distinguishable from microstructures.

The position of measurement of ferrite grains after unbending was a region formed as a result of bending and including a corner portion extending in the width (C) direction (see the reference sign D1 in Fig. 1). More specifically, in an area that was lowest in a direction perpendicular to the width direction and the rolling direction (a pressing direction of a pressing unit of a punch or the like) after bending, the number of ferrite grains was measured in a region extending by 0 to 50 um in the thickness direction.

The area fraction of each microstructure was measured as described below. A thickness cross-section of a steel sheet cut at a right angle to the rolling direction was polished and then etched with 3 vol% nital. At its 1/4 thickness position, three view areas were micrographed with a scanning electron microscope (SEM) at a magnification of 1500X, and from image data obtained, the area fraction of each microstructure was determined using Image-Pro manufactured by Media Cybernetics. The average of area fractions in the three view areas was the area fraction of each microstructure in the present invention. In the image data, ferrite was distinguished as black, bainite as black including island-shaped retained austenite or gray including regularly oriented carbides, tempered martensite as light gray including fine irregularly oriented carbides, and retained austenite as white. Fresh martensite also exhibited a white color, and fresh martensite and retained austenite were difficult to distinguish from each other in the SEM images. Thus, the area fraction of fresh martensite was determined by subtracting the area fraction of retained austenite determined by a method described later from the total area fraction of fresh martensite and retained austenite.

Although not shown in Table 3, the area fraction of remaining microstructures can be determined by subtracting the total area fraction of ferrite (F), tempered martensite (TM), bainite (B), retained austenite (RA), and fresh martensite (FM) from 100%, and these remaining microstructures were estimated to consist of pearlite and/or cementite.

An X-ray diffraction intensity was measured to determine the volume fraction of retained austenite, and the volume fraction was regarded as the area fraction of retained austenite. The volume fraction of retained austenite was determined as the ratio of an integrated X-ray diffraction intensity of (200), (220), and (311) planes of fcc iron to an integrated X-ray diffraction intensity of (200), (211), and (220) planes of bcc iron at the 1/4 thickness plane.

Tensile properties and crashworthiness were determined according to the following test methods. The results are shown in Table 3.

<Tensile test>

From each of the steel sheets obtained, a JIS No. 5 tensile test piece (JIS Z 2201) was sampled in a direction perpendicular to the rolling direction, and a tensile test was performed at a strain rate of $10^{-3}$/s in accordance with provisions of JIS Z 2241 (2011) to determine the tensile strength (TS). A steel sheet having a TS of 780 MPa or more was evaluated as acceptable.

<Bending-orthogonal bending test>

Each of the steel sheets obtained was bent by 90° in a rolling (L) direction with a width (C) direction as an axis at radius of curvature/sheet thickness: 4.2 and then subjected to unbending (primary bending) to be flattened again, thereby preparing a test piece. In the 90° bending (primary bending), as illustrated in Fig. 1, a punch B1 was pressed against the steel sheet placed on a die A1 having a V-groove to obtain a test piece T1. Next, as illustrated in Fig. 2, a punch B2 was pressed against the test piece T1 placed on support rolls A2 such that the bending direction was a direction perpendicular to the rolling direction to perform orthogonal bending (secondary bending). In Figs. 1 and 2, D1 denotes the width (C) direction, and D2 denotes the rolling (L) direction.

The test piece T1 as a result of subjecting the steel sheet to 90° bending (primary bending) is illustrated in Fig. 3. A test piece T2 as a result of subjecting the test piece T1 to orthogonal bending (secondary bending) is illustrated in Fig. 4. The positions indicated by the broken lines on the test piece T2 in Fig. 4 correspond to the positions indicated by the broken lines on the test piece T1 in Fig. 3 before being subjected to the orthogonal bending.

The conditions of the orthogonal bending are as follows.

[Orthogonal bending conditions]

Test method: roll support, punch pressing
Roll diameter: $\phi$30 mm
Punch tip R: 0.4 mm
Roll-to-roll distance: (sheet thickness $\times$ 2) + 1.5 mm
Stroke speed: 20 mm/min
Test piece size: 60 mm $\times$ 60 mm
Bending direction: perpendicular to rolling direction

In a stroke-load curve obtained when the orthogonal bending was performed, a stroke at a point where the load decreased from a maximum load by 50% was determined. The bending-orthogonal bending test was performed three times, and the strokes at points where the load decreased from a maximum load by 50% were averaged to determine $\Delta S_{50}$. A steel sheet having $\Delta S_{50}$ of 29 mm or more was evaluated as having good fracture resistance. When $\Delta S_{50}$ is determined, the load, which determines the stroke length, is important in the evaluation of fracture resistance. Fracture at the time of axial crushing deformation occurs in a manner that a crack that has occurred at a primary-processed portion of a member grows to extend across the sheet thickness, thus leading to fracture. In the bending-orthogonal bending test, a crack occurs in a test piece at or near a maximum load, and as the crack grows, the sectional area of a bent portion diminishes, and the load decreases. That is, the percentage of decrease in load from a maximum load indicates how much a crack has grown with deformation. When $\Delta S_{50}$, a stroke at a point where the load has decreased from a maximum load by 50%, is 29 mm or more, fracture can be suppressed even taking into account variations in actual crushing deformation. Thus, a steel sheet having $\Delta S_{50}$ of 29 mm or more was evaluated as having good fracture resistance.

<Axial Crushing Test>

In view of the influence of sheet thickness, every axial crushing test was performed using a steel sheet having a thickness of 1.2 mm. Each of the steel sheets obtained through the above manufacturing process was cut out and formed (bent) so as to have a depth of 40 mm using a die with a punch corner radius of 5.0 mm and a die corner radius of 5.0 mm, thereby fabricating a hat-shaped member 10 illustrated in Figs. 5 and 6. Separately, the steel sheet used as a material of the hat-shaped member was cut out to a size of 200 mm $\times$ 80 mm. Next, a steel sheet 20 thus cut out and the hat-shaped member 10 were spot welded to fabricate a test member 30 as illustrated in Figs. 5 and 6. Fig. 5 is a front view of the test member 30 fabricated by spot welding the hat-shaped member 10 and the steel sheet 20. Fig. 6 is a perspective view of the test member 30. As illustrated in Fig. 6, spot welds 40 were positioned such that the distance between a steel sheet end and a weld was 10 mm and the distance between the welds was 45 mm. Next, as illustrated in Fig. 7, the test member 30 was joined to a base plate 50 by TIG welding to prepare an axial crushing test sample. Next, an impactor 60 was crashed against the prepared axial crushing test sample at a constant crash speed of 10 m/s to crush the axial crushing test sample by 100 mm. As illustrated in Fig. 7, a crushing direction D3 was parallel to the longitudinal direction of the test member 30. In a stroke-load graph at the crushing, the area of a stroke range of 0 to 100 mm was determined. The test was performed three times, and the areas were averaged to determine an absorbed energy ($F_{ave}$). When $F_{ave}$ was 38000 N or more, the steel sheet was evaluated as having a good absorbed energy. When both the fracture resistance and the absorbed energy were good, the steel sheet was evaluated as having good crashworthiness.

[Table 3]

| Steel sheet No. | Final steel microstructure | | | | | | | | Surface | Tensile strength TS (MPa) | Crashworthiness | | Remarks |
|---|---|---|---|---|---|---|---|---|---|---|---|---|---|
| | V(F) (%) | V(RA) (%) | V(TM+B) (%) | V(FM) (%) | V(F+RA+TM+B+FM) (%) | d(F) *1 µm | CV×CE*2 | N(F$_{void}$)/N(F) *3 (%) | | | Bending test ΔS (mm) | Axial crushing test F$_{ave}$ (N) | |
| 1 | 21 | 4 | 72 | 1 | 98 | 7 | 0.24 | 4 | GA | 1106 | 33 | 43636 | Inventive Example |
| 2 | 40 | 5 | 52 | 2 | 99 | 22 | 0.26 | 11 | GI | 1034 | 34 | 41481 | Inventive Example |
| 3 | 31 | 4 | 61 | 4 | 100 | 23 | 0.25 | 12 | CR | 1107 | 31 | 42627 | Inventive Example |
| 4 | 27 | 4 | 67 | 1 | 99 | 21 | 0.27 | 10 | GA | 1091 | 33 | 43091 | Inventive Example |
| 5 | 39 | 4 | 53 | 4 | 100 | 19 | 0.24 | 10 | EG | 1068 | 33 | 41717 | Inventive Example |
| 6 | 15 | 5 | 75 | 4 | 99 | 20 | 0.15 | 12 | GA | 1169 | 31 | 44306 | Inventive Example |
| 7 | 47 | 10 | 32 | 7 | 96 | 13 | 0.19 | 10 | GI | 1030 | 32 | 39747 | Inventive Example |
| 8 | 47 | 4 | 46 | 3 | 100 | 19 | 0.13 | 8 | GA | 1005 | 36 | 40853 | Inventive Example |
| 9 | 35 | 12 | 36 | 11 | 94 | 10 | 0.21 | 8 | GA | 1114 | 31 | 40342 | Inventive Example |
| 10 | 17 | 4 | 77 | 1 | 99 | 6 | 0.25 | 3 | CR | 1066 | 35 | 43840 | Inventive Example |
| 11 | 49 | 8 | 34 | 9 | 100 | 14 | 0.18 | 10 | GA | 994 | 35 | 39816 | Inventive Example |
| 12 | 49 | 9 | 31 | 7 | 96 | 21 | 0.12 | 11 | GA | 1031 | 32 | 39663 | Inventive Example |

| Steel sheet No. | Final steel microstructure | | | | | | | | Surface | Tensile strength TS (MPa) | Crashworthiness | | Remarks |
| | | | | | | | | | | | Bending test | Axial crushing test | |
| | V(F) (%) | V(RA) (%) | V(TM+B) (%) | V(FM) (%) | V(F+RA+TM+B+FM) (%) | d(F) *1 μm | CV×CE*2 | N(F$_{void}$)/N(F) *3 (%) | | | ΔS (mm) | F$_{ave}$ (N) | |
| 13 | 28 | 5 | 64 | 3 | 100 | 26 | 0.29 | 17 | GA | 1088 | 28 | 37605 | Comparative Example |
| 14 | 11 | 9 | 68 | 7 | 95 | 5 | 0.26 | 12 | GI | 1049 | 33 | 42944 | Inventive Example |
| 15 | 9 | 5 | 82 | 4 | 100 | 6 | 0.19 | 16 | GA | 981 | 28 | 37704 | Comparative Example |
| 16 | 49 | 5 | 43 | 2 | 99 | 13 | 0.19 | 8 | GI | 1165 | 33 | 41175 | Inventive Example |
| 17 | 18 | 8 | 67 | 7 | 100 | 27 | 0.30 | 17 | GA | 1330 | 27 | 37426 | Comparative Example |
| 18 | 13 | 10 | 64 | 11 | 98 | 6 | 0.24 | 4 | GA | 1318 | 29 | 44029 | Inventive Example |
| 19 | 26 | 7 | 59 | 7 | 99 | 29 | 0.29 | 18 | GI | 1181 | 26 | 36807 | Comparative Example |
| 20 | 45 | 8 | 39 | 8 | 100 | 13 | 0.20 | 9 | CR | 950 | 35 | 40088 | Inventive Example |
| 21 | 51 | 5 | 40 | 4 | 100 | 27 | 0.30 | 16 | GA | 897 | 27 | 36990 | Comparative Example |
| 22 | 25 | 5 | 66 | 3 | 99 | 8 | 0.16 | 3 | GA | 1197 | 33 | 43584 | Inventive Example |
| 23 | 38 | 4 | 56 | 0 | 98 | 26 | 0.31 | 17 | GI | 1237 | 27 | 37773 | Comparative Example |
| 24 | 19 | 5 | 72 | 3 | 99 | 6 | 0.25 | 4 | GA | 1008 | 36 | 43048 | Inventive Example |

(continued)

| Steel sheet No. | Final steel microstructure | | | | | | | | Surface | Tensile strength TS (MPa) | Crashworthiness | | Remarks |
|---|---|---|---|---|---|---|---|---|---|---|---|---|---|
| | V(F) (%) | V(RA) (%) | V(TM+B) (%) | V(FM) (%) | V(F+RA+TM+B+FM) (%) | d(F) *1 μm | CV×CE*2 | N(F$_{void}$)/N(F) *3 (%) | | | Bending test ΔS (mm) | Axial crushing test F$_{ave}$ (N) | |
| 25 | 30 | 9 | 48 | 10 | 97 | 26 | 0.31 | 26 | GI | 1046 | 25 | 35184 | Comparative Example |
| 26 | 31 | 4 | 63 | 2 | 100 | 12 | 0.12 | 3 | GA | 972 | 36 | 42103 | Inventive Example |
| 27 | 58 | 3 | 37 | 2 | 100 | 16 | 0.13 | 8 | GA | 767 | 41 | 37519 | Comparative Example |
| 28 | 43 | 4 | 51 | 2 | 100 | 18 | 0.09 | 5 | CR | 867 | 38 | 40685 | Inventive Example |
| 29 | 54 | 5 | 36 | 4 | 99 | 15 | 0.13 | 8 | GA | 768 | 39 | 36530 | Comparative Example |
| 30 | 29 | 4 | 66 | 0 | 99 | 9 | 0.22 | 4 | GA | 1162 | 33 | 43391 | Inventive Example |
| 31 | 55 | 11 | 21 | 10 | 97 | 15 | 0.18 | 22 | GI | 1092 | 27 | 36911 | Comparative Example |
| 32 | 29 | 3 | 67 | 1 | 100 | 9 | 0.21 | 4 | GA | 1018 | 36 | 42684 | Inventive Example |
| 33 | 13 | 2 | 81 | 3 | 99 | 5 | 0.25 | 17 | GI | 1044 | 27 | 37692 | Comparative Example |
| 34 | 19 | 5 | 73 | 2 | 99 | 6 | 0.25 | 3 | GA | 1203 | 32 | 44318 | Inventive Example |
| 35 | 51 | 10 | 27 | 8 | 96 | 27 | 0.17 | 18 | GI | 1076 | 26 | 36421 | Comparative Example |
| 36 | 48 | 4 | 45 | 3 | 100 | 15 | 0.16 | 7 | GA | 796 | 38 | 40315 | Inventive Example |

| Steel sheet No. | Final steel microstructure | | | | | | | | Surface | Tensile strength TS (MPa) | Crashworthiness | | Remarks |
|---|---|---|---|---|---|---|---|---|---|---|---|---|---|
| | | | | | | | | | | | Bending test | Axial crushing test | |
| | V(F) (%) | V(RA) (%) | V(TM+B) (%) | V(FM) (%) | V(F+RA+TM+B+FM) (%) | d(F) *1 μm | CV×CE*2 | N(F$_{void}$)/N(F) *3 (%) | | | ΔS (mm) | F$_{ave}$ (N) | |
| 37 | 45 | 4 | 47 | 4 | 100 | 15 | 0.16 | 6 | GA | 806 | 38 | 40549 | Inventive Example |
| 38 | 39 | 4 | 55 | 1 | 99 | 13 | 0.17 | 5 | CR | 859 | 38 | 41120 | Inventive Example |
| 39 | 49 | 10 | 28 | 8 | 95 | 11 | 0.16 | 16 | GI | 899 | 27 | 37214 | Comparative Example |
| 40 | 12 | 14 | 60 | 6 | 92 | 5 | 0.27 | 4 | GA | 1273 | 29 | 43865 | Inventive Example |
| 41 | 10 | 6 | 79 | 4 | 99 | 5 | 0.25 | 3 | GA | 1226 | 30 | 45598 | Inventive Example |
| 42 | 13 | 7 | 75 | 4 | 99 | 5 | 0.28 | 3 | CR | 1263 | 30 | 44894 | Inventive Example |
| 43 | 48 | 11 | 29 | 5 | 93 | 8 | 0.21 | 17 | GA | 1190 | 27 | 36830 | Comparative Example |
| 44 | 14 | 9 | 65 | 10 | 98 | 9 | 0.16 | 4 | GI | 1125 | 30 | 43094 | Inventive Example |
| 45 | 31 | 4 | 63 | 1 | 99 | 10 | 0.24 | 6 | GA | 1071 | 35 | 42623 | Inventive Example |
| 46 | 14 | 4 | 80 | 2 | 100 | 5 | 0.28 | 3 | GA | 1079 | 35 | 44193 | Inventive Example |
| 47 | 10 | 8 | 73 | 8 | 99 | 3 | 0.28 | 2 | GI | 1249 | 29 | 45119 | Inventive Example |
| 48 | 50 | 10 | 31 | 8 | 99 | 15 | 0.17 | 14 | GA | 1017 | 33 | 39119 | Inventive Example |

EP 4 464 801 A1

| Steel sheet No. | Final steel microstructure | | | | | | | | Surface | Tensile strength TS (MPa) | Crashworthiness | | Remarks |
| | | | | | | | | | | | Bending test | Axial crushing test | |
| | V(F) (%) | V(RA) (%) | V(TM+B) (%) | V(FM) (%) | V(F+RA+TM+B+FM) (%) | d(F) *1 μm | CV×CE*2 | N(F$_{void}$)/N(F) *3 (%) | | | ΔS (mm) | F$_{ave}$ (N) | |
| 49 | 11 | 6 | 77 | 6 | 100 | 4 | 0.22 | 2 | GA | 1244 | 30 | 45501 | Inventive Example |
| 50 | 21 | 5 | 70 | 3 | 99 | 7 | 0.22 | 3 | GA | 1021 | 35 | 42956 | Inventive Example |
| 51 | 19 | 5 | 73 | 3 | 100 | 9 | 0.17 | 3 | GI | 1224 | 31 | 44446 | Inventive Example |
| 52 | 41 | 4 | 52 | 3 | 100 | 12 | 0.19 | 6 | GI | 1012 | 35 | 41385 | Inventive Example |
| 53 | 39 | 5 | 54 | 1 | 99 | 11 | 0.21 | 6 | GA | 1019 | 35 | 41586 | Inventive Example |
| 54 | 22 | 8 | 61 | 9 | 100 | 7 | 0.26 | 5 | GA | 1054 | 34 | 42358 | Inventive Example |
| 55 | 50 | 5 | 42 | 3 | 100 | 14 | 0.18 | 9 | GA | 979 | 36 | 40182 | Inventive Example |
| 56 | 47 | 11 | 30 | 6 | 94 | 13 | 0.18 | 11 | GA | 1095 | 32 | 39738 | Inventive Example |
| 57 | 20 | 8 | 64 | 8 | 100 | 7 | 0.26 | 4 | GA | 1264 | 30 | 43741 | Inventive Example |
| 58 | 20 | 6 | 70 | 3 | 99 | 7 | 0.26 | 4 | GA | 1299 | 30 | 44578 | Inventive Example |
| 59 | 21 | 3 | 74 | 2 | 100 | 7 | 0.23 | 3 | GI | 992 | 36 | 43117 | Inventive Example |
| 60 | 43 | 5 | 47 | 5 | 100 | 12 | 0.17 | 6 | GI | 766 | 40 | 37274 | Comparative Example |

EP 4 464 801 A1

| Steel sheet No. | Final steel microstructure | | | | | | | | Surface | Tensile strength TS (MPa) | Crashworthiness | | Remarks |
|---|---|---|---|---|---|---|---|---|---|---|---|---|---|
| | | | | | | | | | | | Bending test | Axial crushing test | |
| | V(F) (%) | V(RA) (%) | V(TM+B) (%) | V(FM) (%) | V(F+RA+TM+B+FM) (%) | d(F) *1 μm | CV×CE*2 | N(F$_{void}$)/N(F) *3 (%) | | | ΔS (mm) | F$_{ave}$ (N) | |
| 61 | 11 | 13 | 66 | 7 | 97 | 5 | 0.27 | 20 | GA | 1368 | 25 | 37289 | Comparative Example |
| 62 | 9 | 4 | 84 | 2 | 99 | 4 | 0.25 | 18 | GA | 1244 | 27 | 37708 | Comparative Example |
| 63 | 51 | 2 | 43 | 3 | 99 | 13 | 0.13 | 16 | GI | 769 | 27 | 36945 | Comparative Example |
| 64 | 19 | 16 | 57 | 5 | 97 | 6 | 0.27 | 17 | GA | 1226 | 26 | 36824 | Comparative Example |
| 65 | 14 | 7 | 73 | 6 | 100 | 5 | 0.28 | 18 | GI | 1216 | 26 | 37397 | Comparative Example |
| 66 | 38 | 5 | 54 | 3 | 100 | 11 | 0.19 | 18 | GI | 1009 | 27 | 37541 | Comparative Example |
| 67 | 48 | 3 | 47 | 2 | 100 | 13 | 0.14 | 6 | CR | 766 | 38 | 37431 | Comparative Example |
| 68 | 17 | 4 | 77 | 1 | 99 | 6 | 0.25 | 16 | GA | 1013 | 27 | 36500 | Comparative Example |

V(F): Area fraction of ferrite, V(TM+B): Total area fraction of tempered martensite and bainite V(RA): Area fraction of retained austenite, V(FM): Area fraction of fresh martensite V(F+RA+TM+B+FM): Total area fraction of ferrite, tempered martensite, bainite, retained austenite, and fresh martensite *1: Average crystal grain size of ferrite *2: Coefficient of variation (CV) of ferrite grain size × carbon equivalent (CE) *3: Ratio of ferrite grains having a void at an interface to all ferrite grains in an L section in a region extending by 0 to 50 μm from a steel sheet surface on a compressive side, as determined when a steel sheet is bent by 90° in a rolling (L) direction with a width (C) direction as an axis at radius of curvature/sheet thickness: 4.2

The steel sheets of Inventive Examples had a TS of 780 MPa or more, and were excellent in crashworthiness. On the other hand, the steel sheets of Comparative Examples had a TS of less than 780 MPa or were poor in crashworthiness.

[Example 2]

The steel sheet No. 1 (Inventive Example) in Table 3 of Example 1 was formed by pressing to manufacture a member of Inventive Example. Furthermore, the steel sheet No. 1 in Table 3 of Example 1 and the steel sheet No. 30 (Inventive Example) in Table 3 of Example 1 were joined together by spot welding to manufacture a member of Inventive Example. It was confirmed that the members of Inventive Example manufactured using the steel sheets according to the present invention were excellent in crashworthiness and had high strength and that both the member manufactured by forming the steel sheet No. 1 (Inventive Example) in Table 3 of Example 1 and the member manufactured by spot welding the steel sheet No. 1 in Table 3 of Example 1 and the steel sheet No. 30 (Inventive Example) in Table 3 of Example 1 were suitable for use for automotive frame parts and the like.

[Example 3]

The galvanized steel sheet No. 1 (Inventive Example) in Table 3 of Example 1 was formed by pressing to manufacture a member of Inventive Example. Furthermore, the galvanized steel sheet No. 1 in Table 3 of Example 1 and the galvanized steel sheet No. 30 (Inventive Example) in Table 3 of Example 1 were joined together by spot welding to manufacture a member of Inventive Example. It was confirmed that the members of Inventive Example manufactured using the steel sheets according to the present invention were excellent in crashworthiness and had high strength and that both the member manufactured by forming the steel sheet No. 1 (Inventive Example) in Table 3 of Example 1 and the member manufactured by spot welding the steel sheet No. 1 in Table 3 of Example 1 and the steel sheet No. 30 (Inventive Example) in Table 3 of Example 1 were suitable for use for automotive frame parts and the like.

Reference Signs List

10    hat-shaped member
20    steel sheet
30    test member
40    spot weld
50    base plate
60    impactor
A1    die
A2    support roll
B1    punch
B2    punch
D1    width (C) direction
D2    rolling (L) direction
D3    crushing direction
T1    test piece
T2    test piece

Industrial Applicability

According to the present invention, a steel sheet having a TS of 780 MPa or more and excellent in crashworthiness can be obtained. Using a member obtained using the steel sheet according to the present invention as an automotive part can contribute to reducing the weight of an automobile and greatly contribute to improving the performance of an automobile body.

**Claims**

1.  A steel sheet comprising:

      a chemical composition satisfying a carbon equivalent (CE) of 0.46% or more; and

a steel microstructure including, in terms of area fraction, ferrite: 10% to 50%, tempered martensite and bainite in total: 30% or more, retained austenite: 3% to 20%, fresh martensite: 15% or less, and ferrite, tempered martensite, bainite, retained austenite, and fresh martensite in total: 90% or more,

wherein an average crystal grain size of ferrite is 25 um or less,

coefficient of variation (CV) of ferrite grain size $\times$ carbon equivalent (CE) is 0.28 or less,

when the steel sheet is bent by 90° in a rolling (L) direction with a width (C) direction as an axis at radius of curvature/sheet thickness: 4.2 and then unbent to be flattened again, a number ratio ($NF_{void}/NF$) of ferrite grains having a void at an interface to all ferrite grains is 15% or less in an L section in a region extending by 0 to 50 um from a steel sheet surface on a compressive-tensile deformation side, and

a tensile strength is 780 MPa or more.

2. The steel sheet according to Claim 1,

wherein the chemical composition contains, by mass%, C: 0.07% to 0.20%,
Si: 0.10% to 2.00%,
Mn: 1.5% to 4.0%,
P: 0.100% or less,
S: 0.050% or less,
Sol. Al: 0.005% to 0.100%, and
N: 0.0100% or less, with the balance being Fe and incidental impurities.

3. The steel sheet according to Claim 2,

wherein the chemical composition further contains, by mass%, at least one selected from
Cr: 1.000% or less,
Mo: 0.500% or less,
V: 0.500% or less,
Ti: 0.500% or less,
Nb: 0.500% or less,
B: 0.0050% or less,
Ni: 1.000% or less,
Cu: 1.000% or less,
Sb: 1.000% or less,
Sn: 1.000% or less,
As: 1.000% or less,
Ca: 0.0050% or less,
W: 0.500% or less,
Ta: 0.100% or less,
Mg: 0.050% or less,
Zr: 0.050% or less, and
REM: 0.005% or less.

4. The steel sheet according to any one of Claims 1 to 3, having, on a surface of the steel sheet, an electrogalvanized layer, a hot-dip galvanized layer, or a hot-dip galvannealed layer.

5. A member obtained by subjecting the steel sheet according to any one of Claims 1 to 4 to at least one of forming and welding.

6. A method for manufacturing a steel sheet, the method comprising:

a hot rolling step of heating a steel slab satisfying a carbon equivalent (CE) of 0.46 or more and having the chemical composition according to Claim 2 or 3 to a temperature range of 1100°C to 1300°C, performing hot rolling at a finish rolling temperature of 800°C to 950°C, and performing coiling with a cumulative rolling reduction in finish rolling set to 60% or more, a holding time in a temperature range of 750°C to 600°C in a cooling process from finish rolling delivery to coiling set to 10 s or less, and a coiling temperature set to 600°C or lower;
a cold rolling step of pickling a hot-rolled steel sheet obtained in the hot rolling step and performing cold rolling at a cumulative rolling reduction of 20% or more;
an annealing step of heating a cold-rolled steel sheet obtained in the cold rolling step to an annealing temperature of 750°C to 880°C and performing holding for 30 seconds or more;

a quenching step of, after the annealing step, performing cooling to a cooling stop temperature: (Ms - 250°C) to (Ms - 50°C); and

a tempering step of, after the quenching step, performing heating to a reheating temperature: 300°C to 500°C and holding for 20 seconds or more.

7. A method for manufacturing a hot-rolled steel sheet for a cold-rolled steel sheet, the method comprising:

a hot rolling step of heating a steel slab satisfying a carbon equivalent (CE) of 0.46 or more and having the chemical composition according to Claim 2 or 3 to a temperature range of 1100°C to 1300°C, performing hot rolling at a finish rolling temperature of 800°C to 950°C, and performing coiling with a cumulative rolling reduction in finish rolling set to 60% or more, a holding time in a temperature range of 750°C to 600°C in a cooling process from finish rolling delivery to coiling set to 10 s or less, and a coiling temperature set to 600°C or lower, thereby manufacturing a hot-rolled steel sheet having a microstructure including, in terms of area fraction of a hot-rolled steel sheet microstructure, ferrite: 20% or less, and fresh martensite and bainite in total: 80% or more.

8. A method for manufacturing a cold-rolled steel sheet, the method comprising a cold rolling step of pickling a hot-rolled steel sheet obtained by the method for manufacturing a hot-rolled steel sheet for a cold-rolled steel sheet according to Claim 7 and performing cold rolling at a cumulative rolling reduction of 20% or more.

9. The method for manufacturing a steel sheet according to Claim 6, comprising, after the annealing step and before the quenching step, or after the tempering step, a coating step of performing electrogalvanizing, hot-dip galvanizing, or hot-dip galvannealing on a surface of the steel sheet.

10. The method for manufacturing a steel sheet according to Claim 9, wherein the coating step after the annealing step and before the quenching step includes performing holding in a temperature range of 300°C to 500°C for 0 to 300 s before coating.

11. A method for manufacturing a member, the method comprising a step of subjecting a steel sheet manufactured by the method for manufacturing a steel sheet according to Claim 6, 9, or 10 to at least one of forming and welding.

# FIG. 1

# FIG. 2

# FIG. 3

D1

D2

T1

# FIG. 4

D1

D2

T2

## FIG. 5

## FIG. 6

# FIG. 7

## INTERNATIONAL SEARCH REPORT

International application No.

**PCT/JP2022/008145**

| A. | CLASSIFICATION OF SUBJECT MATTER |
|---|---|

***C21D 8/02***(2006.01)i; ***C21D 9/46***(2006.01)i; ***C22C 38/00***(2006.01)i; ***C22C 38/60***(2006.01)i
FI: C22C38/00 301T; C22C38/00 301A; C22C38/00 301S; C22C38/60; C21D9/46 J; C21D8/02 A

According to International Patent Classification (IPC) or to both national classification and IPC

| B. | FIELDS SEARCHED |
|---|---|

Minimum documentation searched (classification system followed by classification symbols)

C21D8/02; C21D9/46; C22C38/00-38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | WO 2015/151419 A1 (JFE STEEL CORP) 08 October 2015 (2015-10-08)<br>claims, paragraphs [0001]-[0058], tables 1-6 | 1-11 |
| Y | WO 2018/043456 A1 (JFE STEEL CORP) 08 March 2018 (2018-03-08)<br>claims, paragraphs [0001]-[0084], tables 1-3 | 1-5, 9-11 |
| Y | WO 2021/140663 A1 (JFE STEEL CORP) 15 July 2021 (2021-07-15)<br>claims, paragraphs [0001]-[0075], tables 1-6 | 1-5, 9-11 |
| Y | JP 2020-59881 A (NIPPON STEEL CORP) 16 April 2020 (2020-04-16)<br>claims, paragraphs [0001]-[0095], tables 1-3 | 1-5 |
| Y | JP 2016-28172 A (NIPPON STEEL & SUMITOMO METAL CORP) 25 February 2016<br>(2016-02-25)<br>claims, paragraphs [0001]-[0104], tables 1-8 | 1-5, 9-11 |
| Y | JP 2010-59452 A (SUMITOMO METAL IND LTD) 18 March 2010 (2010-03-18)<br>claims, paragraphs [0001]-[0050], tables 1-3 | 1-5, 9-11 |

☑ Further documents are listed in the continuation of Box C.   ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/008145** |

**C.     DOCUMENTS CONSIDERED TO BE RELEVANT**

| Category* | Citation of document, with indication, where appropriate, of the relevant passages | Relevant to claim No. |
| --- | --- | --- |
| Y | WO 2016/194272 A1 (JFE STEEL CORP) 08 December 2016 (2016-12-08) claims, paragraph [0039] | 1-5 |
| Y | JP 2022-510212 A (POSCO) 26 January 2022 (2022-01-26) claims, paragraph [0069] | 6-11 |
| Y | JP 2011-179050 A (KOBE STEEL LTD) 15 September 2011 (2011-09-15) paragraphs [0061]-[0062] | 6-11 |

Form PCT/ISA/210 (second sheet) (January 2015)

### INTERNATIONAL SEARCH REPORT
#### Information on patent family members

International application No.

**PCT/JP2022/008145**

| Patent document cited in search report | | | Publication date (day/month/year) | Patent family member(s) | | | Publication date (day/month/year) |
|---|---|---|---|---|---|---|---|
| WO | 2015/151419 | A1 | 08 October 2015 | US | 2017/0145534 | A1 | |
| | | | | claims, paragraphs [0001]-[0085], tables 1-6 | | | |
| | | | | EP | 3128027 | A1 | |
| | | | | CN | 106170574 | A | |
| WO | 2018/043456 | A1 | 08 March 2018 | US | 2019/0203315 | A1 | |
| | | | | claims, paragraphs [0001]-[0113], tables 1-3 | | | |
| | | | | EP | 3476963 | A1 | |
| | | | | KR | 10-2019-0028758 | A | |
| | | | | CN | 109642281 | A | |
| WO | 2021/140663 | A1 | 15 July 2021 | (Family: none) | | | |
| JP | 2020-59881 | A | 16 April 2020 | (Family: none) | | | |
| JP | 2016-28172 | A | 25 February 2016 | (Family: none) | | | |
| JP | 2010-59452 | A | 18 March 2010 | (Family: none) | | | |
| WO | 2016/194272 | A1 | 08 December 2016 | KR | 10-2017-0137899 | A | |
| | | | | claims, paragraphs [0059], [0060] | | | |
| | | | | CN | 107614731 | A | |
| | | | | MX | 2017015333 | A | |
| JP | 2022-510212 | A | 26 January 2022 | US | 2022/0042132 | A1 | |
| | | | | claims, paragraph [0083] | | | |
| | | | | EP | 3889296 | A2 | |
| | | | | WO | 2020/111856 | A2 | |
| | | | | KR | 10-2020-0064511 | A | |
| JP | 2011-179050 | A | 15 September 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012031462 A
- JP 2015175061 A